# EUROPÄISCHE PATENTSCHRIFT

(11) **EP 3 120 694 B1**
(45) Veröffentlichungstag und Bekanntmachung des Hinweises auf die Patenterteilung: **31.01.2018**
(21) Anmeldenummer: 16175385.0
(22) Anmeldetag: 21.06.2016
(51) Int. Cl.: A01G 17/14

(54) **PROFILSTAB FÜR DEN WEIN, OBST- ODER GEMÜSEANBAU**
SLAT FOR WINE, FRUIT OR VEGETABLE CULTIVATION
BARRE PROFILEE POUR LA CULTURE DE VIGNES, MARAICHERE OU FRUITIERE

(30) Priorität: 20.07.2015 DE 202015103799 U; 26.08.2015 DE 202015104522 U
(43) Veröffentlichungstag der Anmeldung: 25.01.2017
(73) Patentinhaber: Fuchs, Alfred, 78467 Konstanz (DE)
(72) Erfinder: Fuchs, Alfred, 78467 Konstanz (DE)
(74) Vertreter: Patentanwälte Behrmann Wagner PartG mbB

(56) Entgegenhaltungen:
- EP-A1- 1 099 369
- FR-A1- 2 816 344
- US-A- 5 975 501
- US-A1- 2003 126 794
- US-B1- 6 691 479

## Beschreibung

Die Erfindung betrifft einen Profilstab zum Aufbau eines Drahtrahmens im Wein-, Obst- oder Gemüseanbau gemäß dem Oberbegriff des Anspruchs 1, mit mindestens einem in den sich entlang einer Längsachse erstreckenden Profilstab eingeformten Haken zum Einhängen eines Drahtes für die Befestigung einer Pflanze, insbesondere einer Weinrebe. Ferner betrifft die Erfindung ein Abschlussprofilelement für einen Profilstab zum Aufbau eines Drahtrahmens gemäß Anspruch 8 eine Erdankervorrichtung zum Fixieren und Spannen eines mit einem Profilstab haltbaren Drahtes gemäß Anspruch 9 sowie eine Pflanzenspange gemäß Anspruch 11 und/oder 12 zum Festlegen einer Pflanze an einem solchen Draht. Ferner betrifft die Erfindung eine Einschlagvorrichtung zum Einschlagen eines Profilstabes gemäß Anspruch 10. Darüber hinaus betrifft die Erfindung ein mindestens eine der vorgenannten Komponenten umfassendes Drahtrahmenbausystem für den Wein-, Obst- oder Gemüseanbau.
Profilstäbe zum Aufbau eines Drahtrahmens im Wein-, Obst- oder Gemüseanbau sind hinlänglich bekannt. Hierzu wird exemplarisch auf die FR-A-2816344, DE 36 08 549 A1, die DE 44 36 936 C2, DE 101 05 830 A1, die DE 101 05 831A1, die DE 102 03 470 A1, die DE 196 52 597A1, die DE 197 49 236 A1, die DE 299 11 927U1, die DE 10 2004 007 470 A1, die DE 10 2004 038 750 A1, die DE 10 2004 041 130 A1, die DE 10 2009 034 661 A1, die DE 20 2004 006 546 U1, die DE 20 2004 016 388 U1, die EP 1 046 767 B1, die EP 1 068 795 B1, die EP 1 320 651 B1, die EP 1 340 422 B1, die EP 1 629 709B1, die EP 1 661 451 A1, die EP 1 902 612 A2, die EP 1 982 579 B1, die EP 2 111 745A1, die EP 2 428 111 A1, die EP 2 449 876 A1, die FR 1 443 375A, die FR 2 194 361 A1, die FR 2 238 424 A1, die FR 2 447 141A1, die FR 2 565 775A1, die FR 2 601 846A1, die FR 2 606 589A1, die FR 2 611 428 A1, die FR 2 715 270 A3, die FR 2 784 005 A1, die FR 2 838 603A1, die FR 2 849 988 A3 und die WO 2004/091285A1 verwiesen.

Aus den vorgenannten Druckschriften sind im Wesentlichen U-förmige Weinbaupfähle bekannt, die aus Stahlblech gebogen sind. Die bekannten Weinbaupfähle weisen ein vergleichsweise hohes Gewicht auf, sind unkomfortabel handhabbar und hinsichtlich ihrer Stabilität verbesserungsbedürftig.

Ausgehend von dem vorbekannten Stand der Technik liegt der Erfindung daher die Aufgabe zugrunde einen einfach handhabbaren, mit einfachen Mitteln in das Erdreich einschlagbaren, leichtgewichtigen sowie gleichzeitig robusten bzw. stabilen Profilstab, insbesondere Weinbaupfahl anzugeben, der sich für die Herstellung von Drahtrahmen im Wein-, Obst- oder Gemüsebau eignet. Ferner besteht die Aufgabe darin, Systemkomponenten zur weiteren Erleichterung des Einsatzes eines solchen Profilstabes anzugeben.

Diese Aufgabe wird hinsichtlich des Profilstabes mit den Merkmalen des Anspruchs 1 gelöst, d.h. bei einem gattungsgemäßen Profilstab dadurch, dass der, bevorzugt als Strangpressprofil ausgebildete, Profilstab aus Metall, insbesondere einer Leichtmetalllegierung, insbesondere einer Aluminiumlegierung, oder alternativ beispielsweise aus Stahl ausgebildet ist und in einer Querschnittsansicht T-, Y- oder kreuzförmig ausgestaltet ist und mindestens drei, insbesondere genau drei oder genau vier, winklig zueinander angeordnete, bevorzugt gleichgroße, und sich entlang der Längsachse sowie radial bezogen auf eine Längsachse, insbesondere Längsmittelachse des Profilstabes erstreckende Profilabschnitte aufweist, die insbesondere in einem gemeinsamen Zentrum (insbesondere einer Zentralachse) entlang der Längsmittelachse zusammenlaufen, und dass der Haken an einer äußeren ersten Längskante eines ersten der Profilabschnitte ausgebildet ist und eine seitlich offene Aussparung umfasst, die außen begrenzt ist von einem zum Klemmen eines in die Aussparung eingelegten Drahtes nach innen umbiegbaren Längskantenabschnitt der ersten Längskante. Bevorzugt steht der Längskantenabschnitt nicht nach radial außen über benachbarte Abschnitte der ersten Längskante vor.

Die Handhabung eines solchen Profilstabes kann durch den Einsatz eines erfindungsgemäßen Abschlussprofilelements erleichtert bzw. verbessert werden. Das erfindungsgemäße Abschlussprofilelement, welches bevorzugt aus Kunststoff besteht und weiter bevorzugt als einteiliges Kunststoffspritzgussteil ausgebildet ist dient zur Montage auf einem im Querschnitt T-, Y- oder kreuzförmigen, aus einer Leichtmetalllegierung ausgebildeten, mindestens drei, insbesondere genau drei oder genau vier, winklig zueinander angeordneten und sich entlang einer Längsachse erstreckende Profilabschnitte aufweisenden Profilstab, insbesondere einem erfindungsgemäßen Profilstab, zum Aufbau eines Drahtrahmens im Wein-, Obst- oder Gemüseanbau, wobei das Abschlussprofilelement mehrere Axialfortsätze zum axialen Einführen in jeweils einen Umfangsbereich zwischen jeweils zwei der Profilabschnitte des Profilstabes aufweist und wobei zwischen jeweils zwei der Axialfortsätze ein Einführschlitz zum axialen Einführen eines der Profilflächenabschnitte sowie eines Drahtes ausgebildet ist und wobei mindestens einer der Axialfortsätze eine größere Axialerstreckung aufweist als mindestens ein anderer der Axialfortsätze, um dadurch einen seitlichen Anschlag für einen Draht beim Einfädeln des Drahtes zu bilden.

Die Erfindung führt auch auf eine Erdankervorrichtung zum Fixieren und Spannen eines Drahtes gemäß Anspruch 9, eine Einschlagvorrichtung zum Einschlagen eines Profilstabes gemäß Anspruch 10 sowie einer Pflanzenspange zum Festlegen einer Pflanze an einem von einem Profilstab gehaltenen Draht gemäß Anspruch 11 und/oder 12 sowie ein Drahtrahmenbausystem mit den Merkmalen des Anspruchs 13.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Der Erfindung liegt der Gedanke zugrunde, den Profilstab, insbesondere den Weinbaupfahl, aus Metall auszubilden, beispielsweise aus Stahl oder zur Gewichtsreduzierung aus einer Leichtmetalllegierung, insbesondere einer Aluminiumlegierung und gleichzeitig die Stabilität bzw. Robustheit durch die spezielle Formgebung zu gewährleisten, wonach der Profilstab in einer senkrecht zur Längsachse verlaufenden Querschnittsansicht T-, Y- oder kreuzförmig ausgestaltet ist, also mindestens zwei, vorzugsweise zumindest näherungsweise die gleiche Flächenerstreckung aufweisende Profilflächenabschnitte vorzusehen, die winklig zueinander angeordnet sind, um in der senkrecht zur Längserstreckung des Profilstabes orientierten Querschnittsansicht die T-Form, die Y- oder die Kreuzform zu realisieren. Bei einer kreuzförmigen Anordnung der Profilflächenabschnitte sind jeweils zwei benachbarte der Profilflächenabschnitte rechtwinklig zueinander orientiert, wobei bei einer T-förmigen Anordnung verglichen mit der kreuzförmigen Anordnung einer der Profilflächenabschnitte fehlt, d.h. zwei der Profilflächenabschnitte spannen einen Winkel von 180° auf, während sie zu dem dritten Profilflächenabschnitt einen bevorzugten Winkel von 90° aufspannen. Ein weiterer wesentlicher Aspekt des erfindungsgemäßen Profilstabes besteht nun in der Anordnung des mindestens einen Hakens an einer freien Außenkante bzw. Längskante zumindest eines der Profilabschnitte, wobei zur Ausbildung des Hakens in zumindest einen Profilflächenabschnitt eine in Richtung der Längskante seitlich offene, d.h. eine seitliche Einstecköffnung aufweisende Aussparung vorgesehen ist, die abschnittsweise außen begrenzt ist von einem Längskantenabschnitt, der aufgrund der Materialwahl des Profilstabes nach dem Einlegen des Drahtes nach innen auf einen Schnitt- bzw. Kreuzungspunkt der Profilflächenabschnitte hin umbiegbar ist, um den aufgenommenen Draht zu klemmen.

Ganz besonders bevorzugt ist die querschnittlich betrachtete Y-förmige Ausführungsform des Profilstabes, die sich durch drei, vorzugsweise gleichmäßig, in Umfangsrichtung beabstandete Profilflächenabschnitte auszeichnet, die sich an einer, vorzugsweise mit der Längsmittelachse des Profilstabes zusammenfallenden Zentralachse treffen. Im Gegensatz zu der im Querschnitt T-förmigen Ausführungsform ist jeder von zwei benachbarten der Profilflächenabschnitte aufgespannter Winkel kleiner als 180°. Ganz besonders bevorzugt ist eine Ausführungsform, bei der sämtliche unmittelbar benachbarten Profilflächenabschnitte einen Winkel von 120° einschließen, d.h. dass die Profilflächenabschnitte gleichmäßig in Umfangsrichtung beabstandet sind. Die im Querschnitt Y-förmige Ausgestaltung des Profilstabes ist besonders vorteilhaft, da eine zwischen zwei Profilabschnitten aufgenommene bzw. in vertikaler Richtung wachsende Pflanze (bzw. ein Pflanzenast) auf diese Weise die Möglichkeit hat erleichtert in beide Umfangsrichtungen auszutreiben, da bevorzugt der Winkel zwischen zwei benachbarten Profilflächenabschnitten größer ist als bei der kreuzförmigen Ausgestaltungsvariante, d.h. größer ist als 90°, jedoch kleiner als 180°.

Unabhängig von der konkreten Ausgestaltung des Profilstabs als in der Querschnittsansicht T-, Y- oder kreuzförmiger Profilstab ist es bevorzugt, wenn die äußeren Längskanten der Profilflächenabschnitte nicht scharfkantig sondern in Umfangsrichtung betrachtet gerundet ausgestaltet sind, d.h. einen Radius aufweisen, um somit die Verletzungsgefahr bei der Montage zu reduzieren und Pflanzen, insbesondere Pflanzenäste nicht zu beschädigen sowie eine Beschädigung von später noch zu erläuternden Pflanzenspangen zu vermeiden.

Ebenfalls unabhängig von der konkreten Ausgestaltung des Profilstabes als im Querschnitt T-, Y- oder kreuzförmiger Profilstab ist es bevorzugt, wenn sich die Profilflächenabschnitte hin zu der Zentralachse, an der sich die Profilflächenabschnitte treffen verjüngen. Anders ausgedrückt nimmt die in Umfangsrichtung gemessene Breite der Profilflächenabschnitte von radial außen nach radial innen hin zur Zentralachse ab. Als besonders vorteilhaft hat es sich dabei herausgestellt, wenn sich die Breite um mindestens 1 mm oder etwa 1 mm von radial außen nach radial innen beträgt. Eine besonders bevorzugte Ausgestaltungsvariante sieht vor, dass die Breite der Profilflächenabschnitte in einem radial äußeren Abschnitt etwa 3mm und in einem radial inneren, vorzugsweise unmittelbar zur Zentralachse benachbarten Abschnitt 2mm beträgt.

Die vorerwähnte querschnittlich Y-förmig ausgestaltete Ausführungsform des Profilstabes weist bei gleichen Wandstärken in etwa ein 30% geringeres Gewicht auf als das Kreuzprofil und hat zumindest näherungsweise die gleiche Stabilität, insbesondere, wenn man die Wandstärken geringfügig, etwa um 10% verglichen mit einem Kreuzprofil verstärkt. Insgesamt kann somit das Y-Profil deutlich günstiger hergestellt werden. Eine weitere Ersparnis bei zumindest näherungsweise gleichbleibender Stabilität ist möglich, wenn, wie beschrieben, sich die Profilflächenabschnitte hin zur einer bevorzugten mit der Längsmittelachse zusammenfallenden Zentralachse, an der sich die Profilflächenabschnitte treffen, verjüngen. Dabei ist es grundsätzlich möglich und bevorzugt, wenn sich die Profilflächenabschnitte hin zur Zentralachse stetig verjüngen, wobei es auch denkbar ist, wenn eine Stufung realisiert ist, dergestalt, dass die Profilflächenabschnitte in einem radial äußeren Bereich eine größere Erstreckung in Umfangsrichtung aufweisen als in einem radial inneren Bereich, wobei der Übergang zwischen diesen Bereichen als harte Stufe oder kurzer bzw. steiler Gefälleabschnitt realisiert werden kann. Besonders zweckmäßig ist eine Ausführungsform, bei der sich der radial äußere Abschnitt der Profilflächenabschnitte mit der größeren Umfangserstreckung über mindestens 10%, vorzugsweise mindestens 20% der Radialerstreckung des betreffenden Profilflächenabschnitts erstreckt, insbesondere mit in diesem radial äußeren Bereich konstanter bzw. unveränderter Dicken- bzw. Umfangserstreckung über die jeweilige Radialerstreckung. Mit einem Profilstab, der wie zuvor beschrieben ausgebildet ist, der also eine größere Wandstärke an den radial äußeren Enden aufweist, kann eine größtmögliche Stabilität bei gleichzeitig geringem Gewicht erreicht werden. Gleichzeitig kann die Form von später noch zu erläuternden Pflanzenspangen dem Profil bzw. der Kontur des Profilstabes so angepasst werden, dass beim Handling durch Klipsen Vorteile entstehen.

Der erfindungsgemäße Profilstab hat erhebliche Vorteile gegenüber bekannten, häufig als angespitztes Rundeisen ausgebildeten Profilstäben. Er ist vergleichsweise schlank und kann nahezu mühelos in das Erdreich gedrückt werden, ohne dass es wie bei den bekannten spitzen Rundeisen notwendig ist, zunächst ein 30 cm tiefes Loch zu klopfen und den Profilstab in dieses in das Erdreich hineinzudrücken. Dies ist auf die spezielle Geometrie mit den drei oder vier in Umfangsrichtung beabstandeten Profilflächenabschnitten zurückzuführen. Der erfindungsgemäße Profilstab gibt nach allen Seiten einen hervorragenden Halt und bleibt auch bei Sturm und Belaubung stehen. Ganz besonders bevorzugt weist der Profilstab eine glatte Oberfläche auf, wodurch wenig Reibung beim Einschlagen ins Erdreich auftritt. Auch kann sich kein Ungeziefer einnisten und das Heraufklettern wird aufgrund der glatten Oberfläche erschwert. Auch Regenwasser fließt durch die Abstände zwischen den Profilflächenabschnitten optimal geführt in Richtung Wurzeln.

Ganz besonders bevorzugt ist eine Ausführungsform, bei der an zumindest einer der äußeren Längskanten mehrere in Richtung der Längsachse beabstandete, wie zuvor beschriebene ausgebildete Haken vorgesehen bzw. eingeformt sind, wobei in diese Haken jeweils ein Draht einlegbar und der Draht durch Umbiegen eines die jeweilige Aussparung außen begrenzenden Längskantenabschnittes umbiegbar ist.

Ganz besonders bevorzugt ist es, wenn der Profilstab an mehreren der Profilflächenabschnitte, jeweils an deren äußerer Längskante mindestens einen, vorzugsweise an mehreren entlang der Längsachse des Profilstabes beabstandete, wie zuvor beschrieben ausgebildete Haken zur Aufnahme und Klemmung jeweils eines Drahtes aufweist.

Um den erfindungsgemäßen Profilstab für den Aufbau eines Drahtrahmens im Wein-, Obst- oder Gemüseanbau erleichternd in das Erdreich einschlagen zu können ist in Weiterbildung der Erfindung vorgesehen, dass der Profilstab in einem vorderen (unteren) Bereich angespitzt ist, derart, dass die (äußeren) Längskanten der Winkel zueinander angeordneten Profilflächenabschnitte geneigt zur Längserstreckung des Profilstabes nach innen hin auf ein gemeinsames Zentrum zu verlaufen.

Besonders zweckmäßig ist es, wenn der Profilstab in mindestens einen der Profilflächenabschnitte im Bereich eines oberen bzw. hinteren Endes eine Öffnung, insbesondere eine Durchgangsöffnung zum verrastenden Festlegen eines im Folgenden noch zu erläuternden Abschlussprofilelementes aufweist, welches bevorzugt als einteiliges Kunststoffspritzgussteil ausgebildet ist und durch axiales Aufstecken und bevorzugt Verrasten in der vorgenannten Öffnung an dem Profilstab festlegbar ist.

Um den Aufbau eines erfindungsgemäßen Drahtrahmenbaussystems zu erleichtern, ist die Weiterbildung der Erfindung vorgesehen, dass in den Draht nicht lediglich seitlich in die Aussparungen jeweils ein Draht einlegbar ist, sondern auch in mindestens eine stirnseitig vorgesehene Vertiefung auf der Oberseite des Profilstabes, d. h. auf einer von einer Stabspitze abgewandten Axialseite. Zu diesem Zweck ist in Weiterbildung der Erfindung in mindestens einem Profilflächenabschnitt stirnseitig eine Vertiefung/Aussparung vorgesehen, ganz besonders bevorzugt jeweils in zwei winklig zueinander angeordneten Profilflächenabschnitten (jeweils stirnseitig) um dort jeweils einen Draht aufnehmen zu können. Dieser ist nach dem Setzen des Profilstabes einfach von oben einlegbar, wobei es ganz besonders bevorzugt ist, wenn der Draht dann durch Umbiegen einer seitlichen, die jeweilige Vertiefung begrenzenden Wange klemmbar, d. h. in der Vertiefung fixierbar ist, um ein unbeabsichtigtes Herausgleiten nach oben sicher zu verhindern. Eine solche Ausführungsform ist insbesondere auch vorteilhaft bei einer fakultativen, zusätzlichen Verwendung eines später noch zu erläuternden Abschlussprofils, da diese so den oder die oberen Draht/Drähte nicht nach unten fixieren muss, sondern die Kraftaufnahme über die umgebogene Seitenwange des Stabes erfolgt.

Die Erfindung führt auch auf ein Abschlussprofilelement sowie ein System auf den zuvor beschriebenen, erfindungsgemäßen Profilstab und einem daran festgelegten Abschlussprofilelement. Das Abschlussprofilelement ist bevorzugt aus Kunststoff ausgebildet, insbesondere als Kunststoffspritzgussteil und weist mehrere in Umfangsrichtung beabstandete Axialfortsätze auf, die bevorzugt so auf die Umfangsabschnitte zwischen zwei Profilflächenabschnitten des zugehörigen Profilstabs abgestimmt sind, dass das Abschlussprofilelement axial von hinten auf den Profilstab aufgeschoben werden kann und aufgrund der jeweils zwischen zwei Profilflächenabschnitten eingreifenden Axialfortsätze drehfest gehalten ist. Jeweils zwei der bevorzugt im Querschnitt kreissegmentförmigen Axialfortsätze sind über einen Einführschlitz voneinander beabstandet, in den beim Aufschieben auf einen Profilstab ein Profilflächenabschnitt axial einführbar ist und zusätzlich ein stirnseitig, d.h. hinten auf dem Profilstab aufliegender Draht, der mittels des Abschlussprofilelementes zwischen Abschlussprofilelement und Profilstab haltbar, insbesondere klemmbar ist. Um die Abschlussprofilelement- sowie Drahtmontage zu erleichtern, ist erfindungsgemäß vorgesehen, dass mindestens einer der Axialfortsätze, vorzugsweise zwei in Umfangsrichtung nebeneinander angeordnete Axialfortsätze eine größere Axialerstreckung in Richtung der Längserstreckung des Profilstabes aufweist/aufweisen als mindestens ein weiterer der Axialfortsätze, um somit seitlich einen Draht gegen den Axialfortsatz führen zu können, wodurch verhindert wird, dass dieser auf der anderen Seite wieder heraus- bzw. hinunterfällt. Nach dem Anlegen des Drahtes an das axial bis dahin nur ein Stück weit auf den Profilstab aufgeschobene Abschlussprofilelement, kann das Abschlussprofilelement axial weiter bis in eine Endposition auf den Profilstab aufgeschoben werden und somit der Draht in einen Einführschlitz und damit zwischen zwei der Axialfortsätze eingeführt werden.

Besonders zweckmäßig ist es, wenn zwei der Axialfortsätze eine größere Axialerstreckung aufweisen als mindestens ein weiterer, vorzugsweise als zwei weitere Axialfortsätze, wobei die zwei Axialfortsätze mit der größeren Axialerstreckung über zwei, einen durchgehenden Einführschlitz bildende Einführschlitze zur gemeinsamen Aufnahme des Drahtes von dem mindestens einen kürzeren Axialfortsatz beabstandet sind.

Als besonders vorteilhaft hat es sich herausgestellt, wenn an dem Abschlussprofilelement, insbesondere an einem der Axialfortsätze ein seitlicher, sich vorzugsweise senkrecht zur Axialerstreckung des Abschlussprofilelementes erstreckender Rastfortsatz zur verrastenden Aufnahme in einer zuvor erläuterten Öffnung in einem der Profilflächenabschnitte des Profilstabes vorgesehen ist, der in einer Endaxialposition des Abschlussprofilelementes auf dem Profilstab in die Öffnung verschwenkt und in dieser verrastet.

Als besonders vorteilhaft hat es sich herausgestellt, wenn die Einführschlitze nicht axial durchgehend ausgebildet sind, sondern zumindest abschnittsweise an einem Kopfabschnitt des einteiligen Profilelementes enden, wobei dieser Kopfabschnitt auf seiner vom Profilstab abgewandten Seite bevorzugt gerundet ist, um ein erleichtertes Aufziehen eines Netzes auf mit solchen Abschlussprofilelementen versehene Profilstäbe zum Schutz der Weinreben, der Obst- oder Gemüsepflanzen zu ermöglichen. Bevorzugt haben durch die unterschiedlich langen Axialfortsätze auch mehrere zwei der Einführschlitze eine unterschiedliche Längen-, d.h. Tiefenerstreckung.

Um eine zusätzliche Fixierung mindestens eines in einem der Einführschlitze des Abschlussprofilelementes aufgenommenen Drahtes in Richtung der Längserstreckung des Drahtes gegen Verziehen relativ zu dem Abschlussprofilelement und somit zu dem Profilstab zu ermöglichen, ist in Weiterbildung der Erfindung, insbesondere stirnseitig, bevorzugt zentrisch in der hinteren Stirnseite des Abschlussprofilelementes eine Innengewindedurchgangsöffnung vorgesehen, durch die hindurch eine Drahtklemmschraube schraubbar ist, die dann bei an dem Profilstab festgelegtem Profilelement axial in Richtung der Längserstreckung des Profilstabes auf den Draht und somit senkrecht zur Längserstreckung des Drahtes drückt und diesen sichert.

Bevorzugt ist das Abschlussprofilelement endseitig gerundet ausgeführt und/oder weist eine seitliche Abschrägung auf, um über eine Vielzahl von Abschlussprofilelementen, ohne daran hängen zu bleiben, ein Netz zum Schutz der Ernte vor Vögeln aufspannen zu können. Hierdurch wird sichergestellt, dass das Netz über die Abschlussprofilelemente gleitet und hieran nicht hängen bleibt.

In Weiterbildung der Erfindung ist vorgesehen, dass zwei der Axialfortsätze mit größerer Axialerstreckung über einen durchgehenden, von zwei benachbarten der Einführschlitze gebildeten Einführschlitz von mindestens einem, vorzugsweise zwei, der Axialfortsätze mit einer kürzen Axialerstreckung beabstandet sind.

In Weiterbildung der Erfindung ist vorgesehen, dass an dem Abschlussprofilelement, insbesondere einem der Axialfortsätze ein Rastfortsatz zur verrastenden Aufnahme in einer Öffnung in einem Profilflächenabschnitt des Profilstabes, insbesondere einteilig, ausgebildet ist.

In Weiterbildung der Erfindung ist vorgesehen, dass die Einführschlitze axial bis zu einem die Einführschlitze begrenzenden, bevorzugt stirnseitig gerundeten, Kopfabschnitt reichen, ausgehend von dem sich die Axialfortsätze in axialer Richtung erstrecken.

In Weiterbildung der Erfindung ist vorgesehen, dass in dem Abschlussprofilelement eine, bevorzugt stirnseitige, Innengewindedurchgangsöffnung zur Aufnahme einer Drahtklemmschraube vorgesehen ist, insbesondere mit einer darin aufgenommenen Drahtklemmschraube.

Die Erfindung führt auch auf eine Erdankervorrichtung zum Fixieren und Spannen eines mit einem erfindungsgemäßen Profilstab haltbaren bzw. gehaltenen Drahtes, wobei die Erdankervorrichtung ein bevorzugt als Flachprofil, insbesondere Flachstahlprofil ausgebildetes Ankerprofil umfasst, wobei in der Erdankervorrichtung, vorzugsweise in einem sich senkrecht zu dem Ankerprofil erstreckenden Halteprofil, insbesondere in einem hinteren, d.h. von einer Spitze abgewandten Bereich, mindestens eine Durchgangsöffnung, vorzugsweise mehrere Durchgangsöffnungen vorgesehen sind, wobei durch die Durchgangsöffnung eine einen Schraubenkopf aufweisende Kopfschraube geführt ist, die eine sich winklig, insbesondere senkrecht zur Schaftlängserstreckung eines Schaftes der Kopfschraube erstreckende Durchgangsöffnung aufweist, durch die hindurch ein Draht führbar ist, um den Draht durch Verdrehen der Schraube um den Schaft wickeln und somit spannen zu können. Zur Fixierung der Anordnung ist dem Außengewindeschaft der Schraube ein Innengewindeelement, insbesondere eine Mutter zugeordnet, auf der vom Schraubenkopf abgewandten Seite, um somit den zumindest teilweise aufgewickelten Draht seitlich gegen ein die Durchgangsöffnung für die Schraube aufweisendes Halteprofil pressen und somit klemmen bzw. fixieren zu können. Als besonders vorteilhaft hat es sich herausgestellt, wenn zwischen dem Schraubenkopf und dem Halteprofil oder alternativ zwischen dem Innengewindeelement, insbesondere der Mutter und dem Halteprofil eine Sperrscheibe angeordnet ist, die sich an dem Halteprofil verkrallen kann.

In Weiterbildung der Erfindung ist vorgesehen, dass zwischen dem Schraubenkopf und dem Ankerprofil oder zwischen dem Innengewindeelement und dem Ankerprofil eine Sperrscheibe angeordnet ist.

Anstatt die Erdankervorrichtung aus einem durchgehenden Flachprofil, insbesondere Flachstahlprofil auszubilden ist es alternativ denkbar ein Rundprofil, beispielsweise ein Rundeisen oder ein Mehrkantprofil einzusetzen, an dessen vorderem Ende eine Erdfahne fixiert ist, wobei die Erdfahne das Ankerprofil zum Versenken im Erdreich bildet. Bevorzugt handelt es sich bei der Erdfahne, d.h. dem Ankerprofil um ein Flachprofil, insbesondere ein Flachstahlprofil. Auf dem von der Erdfahne abgewandten Ende der Erdankervorrichtung ist an dem Rund- oder Mehrkantprofil bevorzugt eine Schraubfahne fixiert, die das Halteprofil zum Fixieren des mindestens eines Drahtes bildet. Diese Schraubfahne umfasst mindestens eine Durchgangsöffnung zur Aufnahme einer entsprechenden, bevorzugt als Kopfschraube ausgebildeten Fixierschraube zum Fixieren des Drahtes. Diese Schraube ist bevorzugt wie im vorhergehenden Absatz beschrieben ausgebildet.

Die Erfindung führt auch auf eine Einschlagvorrichtung zum Einschlagen eines erfindungsgemäßen Profilstabes in das Erdreich, wobei die Einschlagvorrichtung axial auf den Profilstab (bei noch nicht aufgesetztem Abschlussprofilelement) aufsteckbar ist und in einem Einhängeabschnitt einen der Profilflächenabschnitte in einem entsprechenden Schlitz aufnimmt und somit an dem Profilstab gesichert ist und nur noch axial verschoben werden kann. Dieser Einhängeabschnitt ist mit einem seitlich, d.h. radial zur Profilstaberstreckung, eine Schlagfläche ausbildenden Aufschlagabschnitt verbunden, wobei sich der Aufschlagabschnitt vorzugsweise axial beabstandet von dem Einhängeabschnitt befindet. Dem Einhängeabschnitt ist ein axialer Anschlagabschnitt (Axialanschlag) zugeordnet, der an der hinteren Stirnseite des Profilstabes abstützbar ist und somit für einen Axialanschlag bzw. die Krafteinleitung in den Profilstab von axial hinten Sorge trägt.

Ganz besonders bevorzugt ist es, wenn der Einhängeabschnitt mindestens zwei, vorzugsweise drei oder vier in Umfangsrichtung über jeweils einen Spalt beabstandete Stäbe aufweist, die an dem Axialanschlag zusammenlaufen, mit dem die Einschlagvorrichtung sich axial an der hinteren Stirnseite des Profilstabes abstützen kann. Die Spalte sind dabei so bemessen, dass sie der in Umfangsrichtung gemessenen Breite der Profilflächenabschnitte des Profilstabes entsprechen, um somit in den Spalten jeweils einen Profilstababschnitt axial aufnehmen zu können und somit für die Verdrehsicherung Sorge zu tragen.

Ferner führt die Erfindung auf eine Pflanzenspange zum Festlegen einer Pflanze, insbesondere einer Weinreibe, an einem Draht, der bevorzugt mit einem erfindungsgemäßen Profilstab gehalten ist, wobei die Pflanzenspange mindestens einen Drahtfixierabschnitt zum Durchführen des Drahtes sowie einen biegbaren, vorzugsweise einteilig mit dem Drahtfixierabschnitt ausgebildeten Pflanzenfixierabschnitt aufweist, der um die Pflanze umschlingbar ist.

Im Hinblick auf die konkrete Ausgestaltung der Pflanzenspange gibt es unterschiedliche Möglichkeiten. Ganz besonders bevorzugt ist es, unabhängig von der konkreten Ausgestaltung, die Pflanzenspange als einteiliges Kunststoffspritzgussteil auszuführen.

Gemäß einer ersten alternativen Ausführungsform umfasst die Pflanzenspange zwei, jeweils unabhängig von dem jeweils anderen Drahtfixierabschnitt an dem Draht festlegbare Drahtfixierabschnitte, die jeweils einen insbesondere elastisch auslenkbaren Rastabschnitt zum Überschnappen über den Draht aufweisen, wobei die Drahtfixierabschnitte, insbesondere einteilig über den Pflanzenfixierabschnitt miteinander verbunden sind, so dass es möglich ist, zunächst einen der Drahtfixierabschnitte auf den Draht aufzuklipsen, dann mit dem Pflanzenfixierabschnitt mit einem Umschlingungswinkel von mehr als 360° die Pflanze zu umschlingen und den bis dahin noch losen Drahtfixierabschnitt, insbesondere auf derselben Seite des Drahtes wie den vorerwähnten Drahtfixierabschnitt auf den Draht aufzuklipsen.

Gemäß einer alternativen Ausführungsform weist der Pflanzenfixierabschnitt ein freies, insbesondere sich verjüngendes Ende auf, welches in eine, insbesondere schlitzförmige, als Durchgangsöffnung ausgebildete Aufnahmeöffnung der Pflanzenstange einführbar ist, wobei diese Durchgangsöffnung derart angeordnet ist, dass ein in die Aufnahmeöffnung eingeführter Pflanzenfixierabschnitt eine Drahteinführöffnung, durch die ein Draht in den Fixierabschnitt einführbar ist von dem Pflanzenfixierabschnitt blockiert wird, um somit den Draht im Drahtfixierabschnitt zu sichern.

Ganz besonders bevorzugt ist es, wenn die Fixierung des langgestreckten Pflanzenfixierabschnittes in der Aufnahmeöffnung durch ein Übermaß bzw. größeres Breitenmaß des Pflanzenfixierabschnittes in der Aufnahmeöffnung realisiert ist, so dass der Pflanzenfixierabschnitt elastisch und/oder plastisch beim Einführen bzw. Durchziehen durch die Aufnahmeöffnung deformiert wird und somit in der Aufnahmeöffnung, die Drahteinführöffnung versperrend geklemmt wird, wobei es besonders zweckmäßig ist den Pflanzenfixierabschnitt derart auszubilden und auf die Aufnahmeöffnungsbreite abzustimmen, dass der Pflanzenfixierabschnitt senkrecht zu seiner Längserstreckung beim Einführen in die Aufnahmeöffnung gewölbt wird und somit eine Klemmkraft von den beiden Längskanten auf den Aufnahmeöffnungsinnenrand ausgeht.

In Weiterbildung der Erfindung ist vorgesehen, dass zwei, insbesondere als elastisch auslenkbare Rastabschnitte zum Aufklipsen auf den Draht ausgebildete Drahtfixierabschnitte über den Pflanzenfixierabschnitt, bevorzugt einteilig, miteinander verbunden sind.

In Weiterbildung der Erfindung ist vorgesehen, dass ein freies Ende des Pflanzenfixierabschnittes in eine, insbesondere schlitzförmige Aufnahmeöffnung der Pflanzenspange derart einführbar ist, dass bei eingeführtem Pflanzenfixierabschnitt eine Drahteinführöffnung des Drahtfixierabschnittes durch den Pflanzenfixierabschnitt blockiert und dadurch der Draht im Drahtfixierabschnitt sicherbar ist.

In Weiterbildung der Erfindung ist vorgesehen, dass eine Pflanzenfixierabschnittsbreite zum Klemmen des Pflanzenfixierabschnittes in der Aufnahmeöffnung Breite aufweist, die größer ist als eine entsprechende Breite der Aufnahmeöffnung um den Pflanzenfixierabschnitt beim Durchführen durch die Aufnahmeöffnung plastisch und/oder elastisch zu deformieren, insbesondere zu Wölben.

In Weiterbildung der Erfindung ist vorgesehen, dass ein freies Ende des Pflanzenfixierabschnitts zum Erleichtern Finden der Aufnahmeöffnung eine Einlaufschräge aufweist und/oder die Aufnahmeöffnung eine sich über ihre Tiefenerstreckung verengende Breite aufweist.

Die Erfindung führt auch auf eine multifunktional einsetzbare Pflanzenspange mit einem sich, vorzugsweise weg von der Pflanze oder einem Profilstab verjüngenden Anlageabschnitt, der alternativ unmittelbar an einem nach dem Konzept der Erfindung ausgebildeten Profilstab anlegbar ist oder an einer Pflanze bzw. einem Pflanzenast. Der Anlageabschnitt weist hierzu bevorzugt zwei Abschnitte auf, nämlich einen äußeren, sich nach innen bzw. von der Pflanze weg in Richtung eines Pflanzenfixierabschnitt-Befestigungsabschnitts verjüngenden Abschnitt zur Anlage an der Pflanze und einem, bevorzugt nutförmigen, bevorzugt hinteren bzw. pflanzenfixierabschnittbefestigungsseitigen Anlageabschnitt der bevorzugt auch einen Anlageabschnittgrund bzw. -boden ausbildet, wobei in dem hinteren Anlageabschnitt die Längskante eines Profilflächenabschnittes des Profilstabs, insbesondere klemmend, aufgenommen werden kann, insbesondere derart, dass sie sich am Grund dieses nutförmigen bzw. hinteren Abschnitts des Anlageabschnittes abstützt, wobei alternativ zur Fixierung der Pflanzenspange an einem Draht in diesem hinteren Anlageabschnittsbereich ein Draht, bevorzugt klemmend aufgenommen werden kann. Weiter ist zusätzlich zu dem Anlageabschnitt ein flexibel verformbarer bzw. biegbarer, insbesondere bandförmiger Pflanzenfixierabschnitt vorgesehen, der sich noch weiter bevorzugt ausgehend von einer Seite des Anlageabschnittes weg erstreckt, um somit um einen Profilstab und/oder eine Pflanze herumgeführt werden zu können und dann, vorzugsweise in einem von dem Anlageabschnitt abgewandten Bereich, d.h. im Pflanzenfixierabschnitt-Befestigungsabschnitt angeordneten Schlitz der Pflanzenspange fixiert zu werden, wobei es besonders bevorzugt ist mindestens zwei, insbesondere parallele (Befestigungs-, insbesondere Klemm-)Schlitze vorzusehen, um somit die Fixierkraft zu erhöhen. Bevorzugt wird der Pflanzenfixierabschnitt, wie zuvor erläutert, klemmend in einem solchen Schlitz fixiert.

Die erfindungsgemäße Pflanzenspange ist bevorzugt derart ausgestaltet, dass der Anlageabschnitt eine Öffnung begrenzt, die sich radial in eine Richtung von der Pflanze, bevorzugt konisch, verjüngt, insbesondere hin zu einem vorerwähnten Schlitz zur bevorzugt klemmenden Fixierung des Pflanzenfixierabschnitts. Der Öffnungsgrund der Öffnung wird bevorzugt gebildet von dem Grund einer, insbesondere im Querschnitt U-förmigen Nut zum Abstützen der Längskante eines Profilstabes oder zum Abstützen eines Drahtes, wobei es besonders zweckmäßig ist, wenn der Draht und/oder der Profilabschnitt in einem hinteren bzw. unteren Bereich der Öffnung klemmbar ist. Zweckmäßig ist es nun, wenn bevorzugt zusätzlich zu einem Drahtaufnahmeabschnitt im Bereich des Anlageabschnitts eine sich vorzugsweise senkrecht dazu erstreckende Drahtaufnahmenut, insbesondere benachbart zu dem Pflanzenfixierabschnittbefestigungsabschnitt vorgesehen ist, in der ein Draht, insbesondere klemmend aufgenommen werden kann. In diesem Fall handelt es sich bei der Nut um eine sogenannte Drahtklemmnut.

Ganz besonders bevorzugt ist eine Ausführungsform der Pflanzenspange, bei der diese neben einem, vorzugsweise wie zuvor beschrieben ausgebildeten Anlageabschnitt, von dem weg sich der biegbare Pflanzenfixierabschnitt erstreckt, einen Drahtfixierabschnitt sowie einen, vorzugsweise eine Aufnahmeöffnung aufweisenden Pflanzenfixierabschnitt-Befestigungsabschnitt aufweist. Bei dieser besonders bevorzugten Ausgestaltungsform ist nun vorgesehen, dass der Drahtfixierabschnitt, insbesondere umfassend eine nach unten offene Nut, sandwichartig aufgenommen ist zwischen dem Anlageabschnitt, insbesondere in einem Öffnungsgrund des Anlageabschnitts und dem Pflanzenfixierabschnitt-Befestigungsabschnitt, insbesondere dessen Aufnahmeöffnung, zur, insbesondere klemmenden, Fixierung des Pflanzenfixierabschnitts. Mit anderen Worten kann die Pflanzenspange mit der, bevorzugt nach unten oder oben offenen, vorzugsweise als Klemmnut ausgebildeten, Drahtaufnahmenut des Drahtfixierabschnittes in einen vertikal oder horizontal verlaufenden Draht eingehängt, insbesondere eingeclipst, werden, so dass der Anlageabschnitt auf die eine Längsseite des Drahtes weist und der Pflanzenfixierabschnitt-Befestigungsabschnitt auf die gegenüberliegende Seite, so dass der, vorzugsweise unmittelbar an dem Anlageabschnitt angeordnete Pflanzenfixierabschnitt nach Umschlingung einer Pflanze, insbesondere eines Pflanzenastes, und/oder eines Profilstabes unter dem Draht hindurchgeführt und dann an den Pflanzenfixierabschnitt-Befestigungsabschnitt, bevorzugt in dessen Aufnahmeöffnung, vorzugsweise klemmend fixiert werden kann, um somit die Pflanzenspange am Draht zu sichern.

In Weiterbildung der Erfindung ist vorgesehen, dass der Anlageabschnitt eine sich, insbesondere in Richtung Aufnahmeöffnung, verjüngende Öffnung aufweist, an deren Öffnungsgrund eine Längskante des Profilstabes oder ein Draht abstützbar ist, wobei bevorzugt eine die Längskante aufweisender Profilflächenabschnitt des Profilstabes und/oder der Draht in einem hinteren Bereich der Öffnung klemmbar sind/ist.

In Weiterbildung der Erfindung ist vorgesehen, dass die Pflanzenspange bevorzugt benachbart zum Anlageabschnitt eine, insbesondere seitlich, offene Drahtaufnahmenut, insbesondere eine Drahtklemmnut, als Drahtfixierabschnitt aufweist.

In Weiterbildung der Erfindung ist vorgesehen, dass der Drahtfixierabschnitt, insbesondere die offene Drahtaufnahmenut, zwischen dem Anlageabschnitt und der mindestens einen Aufnahmeöffnung zum Fixieren des Pflanzenfixierabschnittes angeordnet ist.

Die Erfindung führt auch auf eine weitere Realisierungsform einer Pflanzenspange zur Fixierung einer Pflanze an einem Draht. Bevorzugt ist diese ebenfalls erfindungsgemäße Ausgestaltungsvariante einer Pflanzenspange in der Art eines Kabelbinders ausgebildet, also langgestreckt bzw. band- oder streifenförmig, wobei die Pflanzenspange eine Vielzahl von hintereinander entlang der Längserstreckung der Pflanzenspange bzw. des Bandes/Streifens angeordnete Widerhakenelementen aufweist, die durch mindestens eine, bevorzugt schlitzartige Öffnung in einem Befestigungsabschnitt, der bevorzugt monolithisch aus Kunststoff ausgebildeten, flexiblen Pflanzenspange hindurch führbar sind. Bevorzugt umfasst die Pflanzenspange zwei solcher entlang ihrer Axialerstreckung hintereinander angeordnete Öffnungen. Die Pflanzenspange kann um eine Pflanze und den Draht umgelegt und dann mit einem vorderen Ende voran durch mindestens eine der vorerwähnten Öffnungen gezogen werden, derart, dass die Widerhakenelemente mit erhöhtem Kraftaufwand durch die Öffnung befördert werden. Dabei sind die Widerhakenelemente derart ausgebildet und angeordnet, dass sie einem Herausziehen zum Lösen der Pflanzenspange einen Widerstand entgegensetzen, wobei die aufzuwendende Kraft größer ist als die Kraft, die benötigt wird, um die Pflanzenspange zum Schließen derselben abschnittsweise durch ihre Öffnung zu ziehen. Im Gegensatz zu einem Kabelbinder ist es jedoch durch entsprechende moderate Kraftaufwendung möglich, die Pflanzenspange wieder zu lösen bzw. den Umschlingungsbereich zu vergrößern, wobei die Lösekraft so bemessen ist, dass diese allein durch das Pflanzenwachstum aufbringbar ist. Mit anderen Worten kann die Pflanze, insbesondere eine Gemüsepflanze, wie eine Tomatenpflanze oder eine Bohnenpflanze selbsttätig die Pflanzenspange weiten bzw. die Pflanzenspange entgegen der Rückhaltewirkung der Widerhaken entgegen einer Fixierrichtung aus der mindestens einen Öffnung herausbewegen, um somit den Umschlingungsumfang zu vergrößern.

Die Erfindung führt auch auf ein Drahtrahmenbausystem für den Wein-, Obst- oder Gemüseanbau, welches bevorzugt einen erfindungsgemäßen Profilstab umfasst und weiter bevorzugt zusätzlich ein Abschlussprofilelement zur Montage, insbesondere zur verrastenden Montage am Profilstab. Zusätzlich oder alternativ kann das Drahtrahmenbausystem eine zuvor erläuterte Erdankervorrichtung, eine Einschlagvorrichtung und/oder mindestens eine, vorzugsweise mehrere Pflanzenspangen gemäß dem Konzept der Erfindung beinhalten.

Das System umfasst, wie erwähnt auch einen Profilstab in Kombination mit einer Pflanzenspange, die bevorzugt mit einem Aufnahmeabschnitt an dem Profilstab festgelegt ist oder alternativ sich mit dem Aufnahmeabschnitt unmittelbar an einer Pflanze abstützt, wobei im letztgenannten Fall bevorzugt an einem Grund einer Öffnung des Anlageabschnitts ein Draht aufgenommen ist. Der Pflanzenfixierabschnitt ist im erstgenannten Fall bevorzugt um den Profilstab mit zwischen zwei Profilflächenabschnitten aufgenommener Pflanze herumgeführt und in einem Schlitz der Pflanzenspange fixiert. Im anderen Fall umschlingt der Pflanzenfixierabschnitt bevorzugt nicht den Profilstab sondern lediglich die Pflanze, d.h. den Pflanzenast und ist dann in dem mindestens einen Schlitz der Pflanzenspange fixiert.

Die erfindungsgemäße Kombination aus im Querschnitt kreuzförmigem, T-förmigem oder Y-förmigem, bevorzugt auch endseitig spitz zulaufenden Profilstab und Abschlussprofilelement und/oder Erdankervorrichtung und/oder Einschlagvorrichtung, bevorzugt in Verbindung mit in Längsrichtung sowie senkrecht dazu, d.h. quer verlaufenden Drähten ermöglicht eine noch nie dagewesene leichte Herstellung eines Weinbergs oder einer Obstplantage. Besonders hervorzuheben ist die Standfestigkeit einer hiermit hergestellten Rebanlage oder Obstplantage gegen Wind oder Sturm, wie dies bisher noch nie der Fall war. Ebenso ist hervorzuheben, dass es noch nie so einfach war, ein Hakelnetz oder ein Vogelnetz über den Weinberg bzw. die Obstplantage zu ziehen, insbesondere wenn die Abschlussprofilelemente endseitig gerundet, insbesondere sphärisch ausgeformt sind.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1: eine perspektivische Seitenansicht einer bevorzugten Ausführungsform eines erfindungsgemäßen Profilstabes mit darin gehaltenen Drähten,
- Fig. 2a bis 2d: unterschiedliche, alternativ realisierbare Querschnittskonturen eines solchen Profilstabes,
- Fig. 3a und 3b: unterschiedliche Ansichten einer ersten alternativen Ausführungsform einer erfindungsgemäßen Pflanzenspange mit zwei Drahtfixierabschnitten,
- Fig. 4: eine alternative Ausführungsform einer Pflanzenspange,
- Fig. 5a und 5b: eine weitere alternative Ausführungsform einer erfindungsgemäßen Pflanzenspange,
- Fig. 6a bis 6c: unterschiedliche Ansichten eines erfindungsgemäßen Abschlussprofilelementes zur Montage auf einem erfindungsgemäßen Profilstab,
- Fig. 7a und 7b: unterschiedliche Ansichten einer erfindungsgemäßen Einschlagvorrichtung,
- Fig. 8a und 8b: unterschiedliche Ansichten einer erfindungsgemäßen Erdankervorrichtung,
- Fig. 8c: eine Kopfschraubenmutterkombination der Erdankervorrichtung,
- Fig. 9a bis 9g: unterschiedliche Ausführungsformen einer erfindungsgemäßen Pflanzenspange, bei der der Draht mithilfe des Pflanzenfixierabschnittes in einer Drahteinführöffnung gefangen ist.
- Fig. 10a bis 10c: weitere Fixier- bzw. Anwendungsmöglichkeiten eines bevorzugten Ausführungsbeispiels einer erfindungsgemäßen Pflanzenspange,
- Fig. 11a bis 11c: ein weiteres alternatives Ausführungsbeispiel einer bevorzugten Ausführungsform einer Pflanzenspange,
- Fig. 12a bis 12c: eine weitere alternative Pflanzenspangenausführungsform,
- Fig. 13: eine alternative Ausführungsform einer Pflanzenspange,
- Fig. 14: eine weitere alternative Ausgestaltungsvariante einer Pflanzenspange (besonders bevorzugte Ausführungsform)
- Fig. 15a - 15e: Anwendungsbeispiele einer Pflanzenspange gemäß Fig. 14,
- Fig. 16 und 17: Darstellungen einer alternativen Ausgestaltungsvariante eines erfindungsgemäßen Profilstabes aus unterschiedlichen Ansichten und teilweise unterschiedlichen (Betriebs-) Zuständen,
- Fig. 18 und 19: unterschiedliche Aussichten eines alternativen, nach dem Konzept der Erfindung ausgebildeten Abschlussprofilelementes zur Verwendung mit einem erfindungsgemäßen Profilstab, und
- Fig. 20 und 21: zwei unterschiedliche Ansichten einer alternativen, erfindungsgemäßen Pflanzenspange.

In den Figuren sind gleiche Elemente und Elemente mit der gleichen Funktion mit den gleichen Bezugszeichen gekennzeichnet.

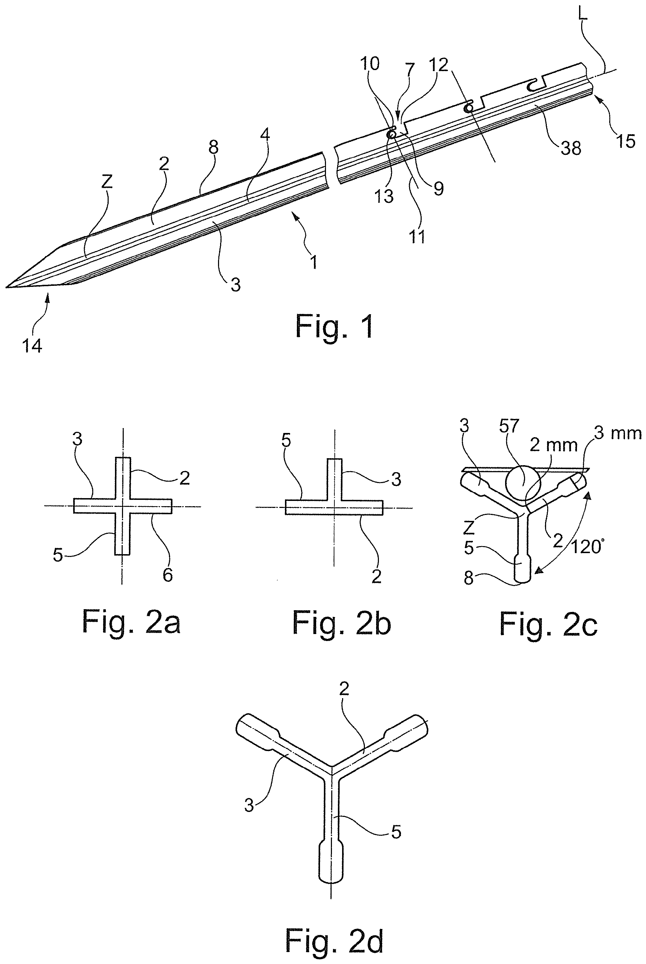

In Fig. 1 ist ein bevorzugt als Strangpressprofil ausgebildeter Profilstab 1 aus einer Aluminiumlegierung gezeigt. Alternativ ist auch eine Realisierung aus Stahl oder einer anderen Leitmetalllegierung möglich. Dieser umfasst mehrere, winklig zueinander angeordnete Profilflächenabschnitte 2, 3, die sich in einer entlang einer Längsachse L verlaufenden Schnittlinie 4 (Kreuzungslinie) treffen, ausgehend von der sie sich bezogen auf die Längsachse L in radialer Richtung erstrecken.

Im Querschnitt kann der Profilstab 1 alternativ wie in Fig. 2a bis 2d ausgestaltet sein, wobei in Fig. 2a ein kreuzförmiges Querschnittsprofil und bei dem Ausführungsbeispiel gemäß Fig. 2b ein T-förmiges Querschnittsprofil und in Fig. 2c ein Y-förmiges Querschnittsprofil realisiert ist. Bei der Variante mit kreuzförmigem Querschnittsprofil gemäß Fig. 2a, sind insgesamt vier Profilflächenabschnitte 2, 3, 5, 6 vorgesehen, wobei jeweils zwei in Umfangsrichtung benachbarte der Profilflächenabschnitte unter einem 90°-Winkel zueinander angeordnet sind, während bei der T-förmigen Querschnittsprofilausgestaltung drei Profilflächenabschnitte 2, 3, 5 realisiert sind und die in Umfangsrichtung unmittelbar benachbarten Profilflächenabschnitte 2, 5 einen Winkel von 180° aufspannen und jeder dieser Profilflächenabschnitte 2, 5 zu dem weiteren Profilflächenabschnitt 3 einen Winkel von 90° aufweisen.

Eine besonders bevorzugte Ausgestaltung des Profilstabes 1 ist in Fig. 2c gezeigt. Dort ist zu erkennen, dass der Profilstab 1 im Querschnitt Y-förmig ausgestaltet ist und insgesamt genau drei, hier in bevorzugter Weise gleichmäßig in Umfangsrichtung beabstandet und sich in radialer Richtung nach außen erstreckende Profilflächenabschnitte 2, 3, 5 aufweist, die sich an einer mit der Längsmittelachse L zusammenfallenden Zentralachse Z treffen. An dem Ausführungsbeispiel gemäß Fig. 2 ist stellvertretend für alle Ausführungsbeispiele gezeigt, dass die äußeren Längskanten 8 bevorzugt nicht scharfkantig ausgebildet sind sondern einen sich in Umfangsrichtung erstreckenden Radius aufweisen, insbesondere um Verletzungsgefahren zu vermeiden, Pflanzen nicht zu beschädigen und auch eine lange Lebensdauer von Pflanzenspangen zu gewährleisten. Ebenfalls stellvertretend für alle Ausführungsbeispiele ist bei dem Ausführungsbeispiel gemäß Fig. 2 gezeigt, dass sich die Profilflächenabschnitte 2, 3, 5 von radial außen nach radial innen hin zur Zentralachse Z verjüngen. So weisen die Profilflächenabschnitte 2, 3, 5 in einem radial äußeren Bereich eine in Umfangsrichtung gemessene Breite von 3mm auf und in einem radial inneren Bereich von 2mm. Hierdurch kann Material einspart werden bei gleichzeitig guter Festigkeit. In Fig. 2c ist dabei besonders gut der Vorteil eines querschnittlich Y-förmig ausgestalteten Profilstabes zu erkennen - die Pflanze bzw. der Pflanzenast 57, hier ein vertikal ausgerichteter Ast kann seitlich austreiben und die Seitentriebe 58 können außen in gerader Linie an den Längskanten 8 der Profilflächenabschnitte 2, 3 vorbei wachsen.

Als besonders vorteilhaft hat es sich herausgestellt, wenn der vorerwähnte Radius, mit dem die Längskanten in Umfangsrichtung abgerundet sind zumindest näherungsweise R = 1,5mm beträgt.

In Fig. 2d ist eine Ausführungsform des Profilstabes in einer Querschnittsansicht gezeigt, bei der ebenfalls eine Y-förmige Anordnung der Profilflächenabschnitten 2, 3, 5 realisiert ist. Die Profilflächenabschnitte 2, 3, 5 weisen jeweils einen radial äußeren, verdickten Bereich auf, also einen radial äußeren Bereich mit einer in Umfangsrichtung gemessenen größeren Wandstärke als in einem angrenzenden, radial inneren Bereich. Der Übergang ist in dem gezeigten Ausführungsbeispiel gestuft ausgebildet. Die Radialerstreckung des radial äußeren, verdickten Bereichs beträgt in etwa ein Drittel der Radialerstreckung des jeweiligen Profilflächenabschnittes. Das gezeigte Ausführungsbeispiel hat den Vorteil einer hohen Stabilität bei sehr geringem Gewicht.

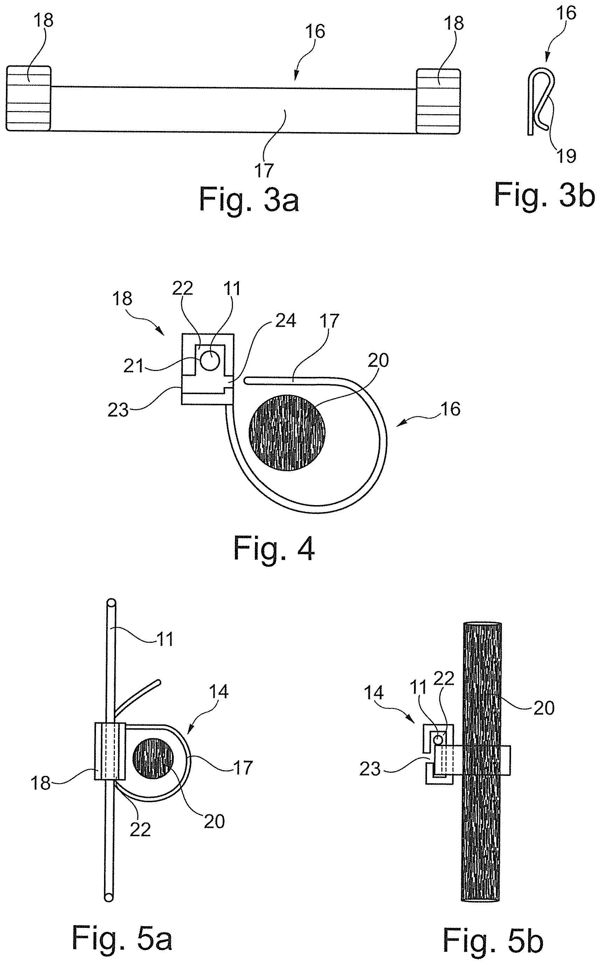

In Fig. 4 ist zu erkennen, dass in einem ersten der Profilflächenabschnitte 2 mehrere Haken 7, insbesondere durch Stanzen eingeformt sind, wobei jeder Haken 7 gebildet ist von einer randseitig, in Richtung einer äußeren Längskante 8 des ersten Profilflächenabschnittes 2 offenen Aussparung 9, die radial außen abschnittsweise begrenzt ist von einem axialen Längskantenabschnitt 10 der Längskante 8, wobei der sich in einer Grundstellung entlang der Längsachse erstreckende und nicht nach radial außen abstehende Längskantenabschnitt 10 bei eingelegtem Draht 11 nach radial innen in Richtung der Schnittlinie 4 umbiegbar ist, um den Draht 11 zu klemmen bzw. ein Herausnehmen aus dem Haken 7 zu verhindern. Wesentlich ist, dass eine seitliche Einstecköffnung 12 für den Draht 11 in der Längskante 8 oberhalb des radial nach innen umbiegbaren Längskantenabschnittes 10 angeordnet ist, so dass der Draht 11 schwerkraftbedingt und insbesondere auf einer bevorzugten Drahtspannung automatisch nach unten in Richtung eines Aussparungsgrundes 13 der Aussparung 9 gelangt.

Zu erkennen ist in Fig. 1 weiter, dass sämtliche Haken 7 nach dem gleichen Prinzip gebildet sind und in Richtung der Längserstreckung L des Profilstabes 1 voneinander beabstandet sind.

In einem vorderen, d.h. unteren Bereich ist der Profilstab 1 mit einer Spitze 14 versehen, um eine erleichtertes Einschlagen zu ermöglichen.

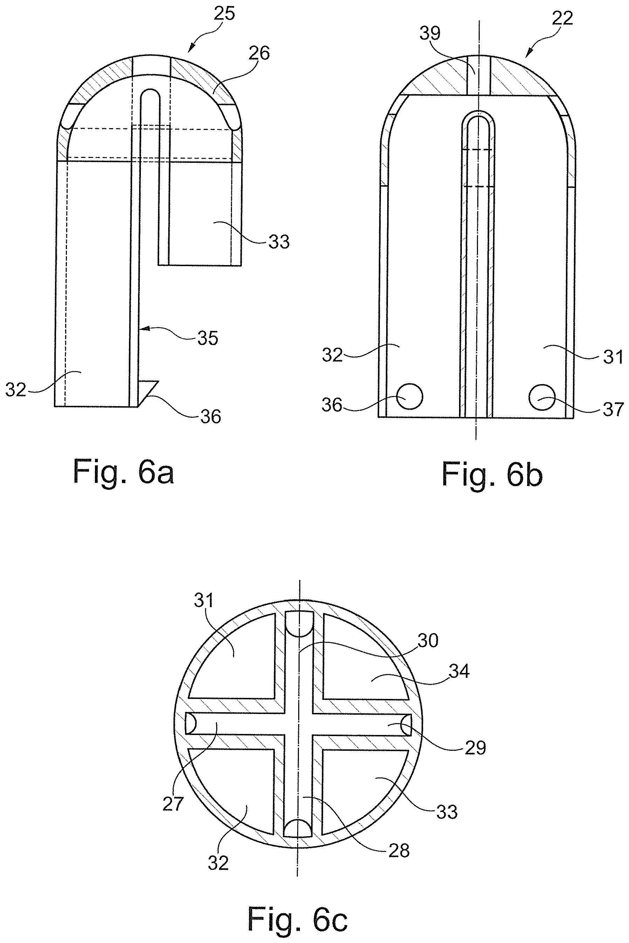

Auf einer hinteren Stirnseite 15, die identisch zum Querschnittsprofil, alternativ gemäß Fig. 2a oder 2b ausgeformt ist, kann zusätzlich mindestens ein Draht vorgesehen werden, vorzugsweise zwei rechtwinklig zueinander angeordnete Drähte, die sich auf der Schnittlinie 4 treffen und die, wie später noch erläutert werden wird, mit einem Abschlussprofil gemäß den Fig. 6a bis 6c gehalten werden können.

In den Fig. 3a und 3b ist ein bevorzugtes Ausführungsbeispiel einer Pflanzenspange 16 gezeigt. Diese umfasst einen langgestreckten Pflanzenfixierabschnitt 17, welcher elastisch verbiegbar ist. Insgesamt ist die Pflanzenstange 16 einteilig als Kunststoffspritzgussteil ausgebildet. Der Pflanzenfixierabschnitt 17, welcher bandförmig gestaltet ist, verbindet einteilig zwei beabstandete Drahtfixierabschnitte 18 miteinander, die endständig angeordnet sind und die jeweils elastisch auslenkbare Rastabschnitte 19 (Rastlaschen) umfassen, die auf einen Draht aufklipsbar sind.

Fig. 4 zeigt eine alternative Pflanzenspange 16 zur im Wesentlichen horizontalen Fixierung einer Pflanze 20 an einem ebenfalls horizontal bzw. parallel zum Erdreich verlaufenden Draht 11. Dieser ist in einem Drahtfixierabschnitt 21 der einteiligen Pflanzenspange 16 aufgenommen, wobei der Drahtfixierabschnitt 21 in einer Aufnahme 22 (Sacklochaufnahme) des Drahtfixierabschnittes 18 angeordnet ist. Der Draht 11 wurde in eine Drahteinführöffnung 23 in die gezeigte Position verbracht. Durch Einschieben bzw. Durchführen des einteilig mit dem Drahtfixierabschnittes 18 verbundenen, biegbaren bandförmigen Pflanzenfixierabschnittes 17 in eine Aufnahmeöffnung 24 wird der Draht 11 in der Aufnahme 22 gefangen, da die Drahteinführöffnung 23 gesperrt wird. In dem gezeigten Ausführungsbeispiel wird hierzu der Pflanzenfixierabschnitt 17 aus der Drahteinführöffnung 23 wieder herausgeführt. Der bandförmige Pflanzenfixierabschnitt 17 weist eine größere Breite auf als die in die gleiche Richtung gemessene Breite der Aufnahmeöffnung 24, so dass er durch die hieraus resultierende Klemmkraft fixiert ist. Diese kann durch das Wachstum der Pflanze 20 teilweise überwunden werden, so dass die Pflanze selbsttätig den Pflanzenfixierabschnitt etwas, jedoch nicht vollständig beim Wachstum aufweitet.

In den Fig. 5a und 5b ist eine alternative Ausführungsform einer Pflanzenspange 16 gezeigt. Die gezeigte Ausführungsform dient zur Fixierung einer im Wesentlichen vertikal wachsenden Pflanze an einem im Wesentlichen horizontal verlaufenden Draht 11. Der Draht 11 ist wieder in einer Aufnahme 22 gehalten und wird dort gesichert mittels des einteilig mit dem Drahtfixierabschnitt 18 ausgebildeten Pflanzenfixierabschnitt 17, welcher durch eine Aufnahmeöffnung 24 des Drahtfixierabschnittes 18 geführt ist und somit die sich senkrecht dazu erstreckende Drahteinführöffnung 23 versperrt.

In den Fig. 6a bis 6c ist eine bevorzugte Ausführungsform eines Abschlussprofilelementes 25 zum endseitigen Montieren auf einen Profilstab, beispielsweise gemäß Fig. 1 gezeigt. Das Abschlussprofilelement 25 ist als einteiliges Kunststoffspritzgussteil ausgebildet und weist einen hinteren, auf seiner Außenseite gerundeten Kopfabschnitt 26 auf, in dem Einführschlitze 27 bis 30 axial enden.
Jeweils in einer Axialebene liegende Einführschlitze 27, 29 und 28, 30 bilden einen gemeinsamen Einführschlitz. Jeweils zwei benachbarte der Einführschlitze 27 bis 30 dienen zur axialen Aufnahme jeweils eines Profilflächenabschnittsendes.

Die Einführschlitze 27 bis 30 beabstanden in dem gezeigten Ausführungsbeispiel vier als Kreissegmentabschnitte ausgebildete Axialfortsätze 31 bis 34, die ausgebildet und angeordnet sind, um in Umfangsrichtung zwischen jeweils zwei der Profilflächenabschnitte 2, 3, 5, 6 des Profilstabes 1 aufgenommen zu werden.

In Fig. 6a ist zu erkennen, dass die in der Zeichnungsebene linken Axialfortsätze 31, 32 eine größere Axialerstreckung aufweisen als die über die Einführschlitze 28, 30 beabstandeten Axialfortsätze 30, 33, so dass senkrecht zur Axialerstreckung in einer Pfeilrichtung 35 zu Montagezwecken ein Draht 11 gegen die Seitenflächen der Axialfortsätze 31, 32 führbar ist, um dann durch weiteres Axialverstellen des Abschlussprofilelements 25 in dem gemeinsamen, von den Einführschlitzen 28, 30 gebildeten Einführschlitz aufgenommen zu werden. Bevorzugt wurde zuvor ein um 90° zu dem vorerwähnten Draht versetzter Draht in den Einführschlitz 27 zwischen den Axialfortsätzen 31, 32 eingeführt. Auf die zuvor beschriebene Art und Weise können stirnseitig an einem Profilstab 1 zwei rechtwinklig zueinander verlaufende Drähte 11 angeordnet und mit dem Abschlussprofilelement 25 gesichert werden. Zur Montage am Profilstab 1 weist das Abschlussprofilelement 25 an den axial längeren Axialfortsätzen 31, 32 jeweils einen seitlichen Rastfortsatz 36, 37 zum Einführen in entsprechende Öffnungen 38 in Profilflächenabschnitten 3 des Profilstabes 1 auf. (vgl. Fig. 1)

Grundsätzlich reicht das Vorsehen eines einzigen Rastfortsatzes für den vorgenannten Zweck aus. Grundsätzlich ist es auch möglich anstelle des an einem längeren Axialfortsatz vorgesehenen Rastfortsatzes einen Rastfortsatz an einem kürzeren der Axialfortsätze vorzusehen - bevorzugt ist jedoch die gezeigte Variante.

Besonders bevorzugt ist es, wenn, wie in den Figuren gezeigt, stirnseitig von hinten in das Abschlussprofilelement 25 eine Innengewindedurchgangsöffnung 39 eingebracht, insbesondere eingeformt ist, durch die hindurch eine Drahtklemmschraube schraubbar ist, um die in den Einführschlitzen 27 bis 30 aufgenommenen Drähte 11 axial gegen die hintere Stirnseite des Profilstabe 1 zu pressen.

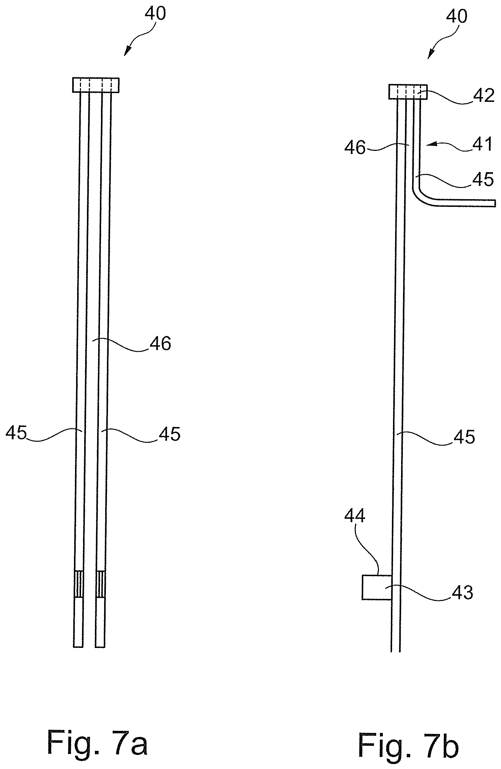

In den Fig. 7a und 7b ist in einer klapprichtigen Darstellung eine bevorzugte Ausführungsform einer Einschlagvorrichtung 40 gezeigt. Diese umfasst einen oberen Einhängeabschnitt 41 zum axialen Aufschieben auf einen im Querschnitt T-, Y- oder kreuzförmigen Profilstab 1, derart, dass mindestens ein Profilflächenabschnitt des Profilstabes zwischen zwei benachbarte Abschnitte des Einführabschnittes aufgenommen werden kann, um die Einschlagvorrichtung 40 gegen Verdrehen am Profilstab 1 zu sichern. Die Einschlagvorrichtung 40 umfasst zudem einen Axialanschlag 42 zur Auflage auf der hinteren Stirnseite eines Profilstabes 1 sowie ein axial von dem Axialanschlag 42 beabstandeten Aufschlagabschnitt 43, der eine obere Aufschlagsfläche 44 ausbildet.

In dem gezeigten Ausführungsbeispiel umfasst der Einführabschnitt 41 vier in Umfangsrichtung beabstandete axiale Fortsätze 45, insbesondere Stangen, wobei jeweils zwei in Umfangsrichtung benachbarte dieser Abschnitte einen der Profilabschnitte des Profilstabes 1 zwischen sich aufnehmen. Anders ausgedrückt begrenzen jeweils zwei der Fortsätze 45 zwischen sich einen Einführschlitz 46 zur jeweiligen Aufnahme eines der Profilflächenabschnitte.

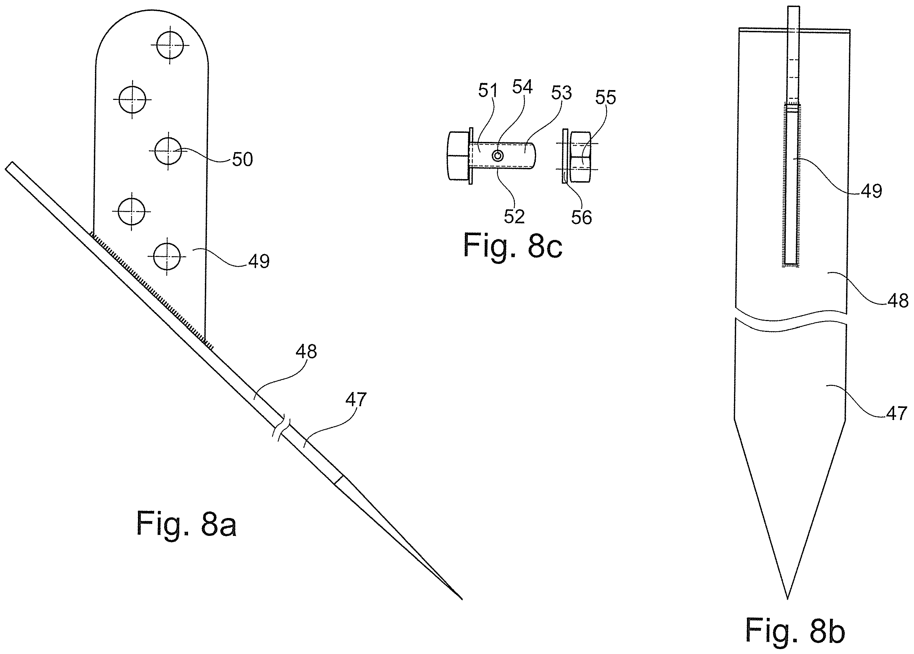

In den Fig. 8a und 8b ist eine Erdankervorrichtung 47 gezeigt, die ein als Flachprofil ausgebildetes Erdankerprofil 48 aufweist, welches auf einer Vorderseite spitz zuläuft und mit dem ein sich winklig dazu erstreckendes Halteprofil 49 angeordnet ist, welches mehrere Durchgangsöffnungen 50 aufweist, durch die eine in Fig. 8c gezeigte Kopfschraube 51 hindurchführbar ist, die in ihrem ein Außengewinde 52 aufweisenden Schaft 53 eine sich senkrecht zur Schaftlängserstreckung erstreckenden Durchgangsöffnung 54 zum Durchführen eines zu fixierenden und zu spannenden Drahtes 11 aufweist. Zum Klemmen des Drahtes 11 gegen das Halteprofil 59 ist der Kopfschraube 51 ein als Mutter ausgebildetes Innengewindeelemente 55 zugeordnet und bevorzugt eine Sperrscheibe 56, die bevorzugt auf der Seite des Innengewindeelementes 55 gegen den Öffnungsrand der Durchgangsöffnung 50 pressbar ist.

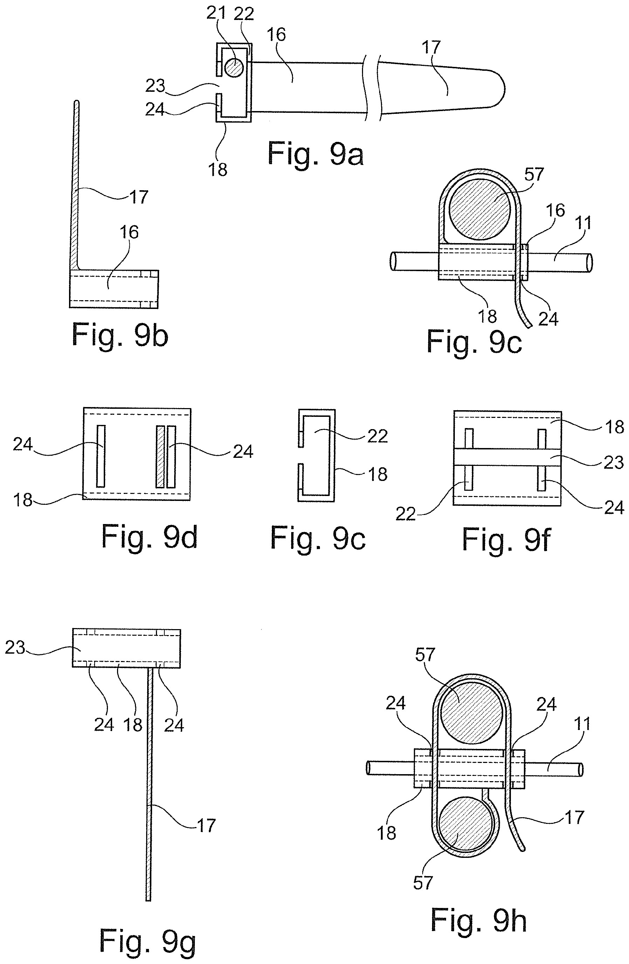

In den Fig. 9a bis 9c ist ein weiteres bevorzugtes Ausführungsbeispiel einer Pflanzenspange 16 zur im Wesentlichen vertikalen Fixierung einer Pflanze 57 (insbesondere eines Pflanzenasts) an einem ebenfalls horizontal bzw. parallel zum Erdreich verlaufenden Draht 11 gezeigt. Dieser ist in einem Drahtfixierabschnitt 18 der einteiligen Pflanzenspange 16 aufgenommen, wobei der Draht in einer Aufnahme 22 des Drahtfixierabschnittes 18 angeordnet ist. Der Draht 11 wurde hierzu in eine Drahteinführöffnung 23 in die gezeigte Position verbracht. Durch Einschieben bzw. Durchführen des einteilig mit dem Drahtfixierabschnitt 18 ausgebildeten, biegbaren bandförmigen Pflanzenfixierabschnittes 17 in eine Aufnahmeöffnung 24 (Schlitz) wird der Draht 11 in der Aufnahme 22 gefangen, da die Drahteinführöffnung 23 von dem Pflanzenfixierabschnitt 17 verspannt wird. In dem gezeigten Ausführungsbeispiel wird hierzu der Pflanzenfixierabschnitt 17 senkrecht zur Längserstreckung des Drahtes 11 unterhalb der Aufnahme 22 durch die Aufnahmeöffnung 24 hindurchgeführt, die die Einführöffnung 23 kreuzt.

Fig. 9d bis 9h zeigen ein alternatives Ausführungsbeispiel einer Pflanzenspange 16, mit der gleichzeitig zwei Pflanzenäste 57 einer Pflanze an einem gemeinsamen Draht 11 fixierbar sind, wobei sich die Pflanzenäste 57 hier in vertikaler Richtung erstrecken und auf zwei voneinander abgewandten Seiten des Drahtes 11 angeordnet sind. Der einteilig mit dem Drahtfixierabschnitt 18 ausgebildete Pflanzenfixierabschnitt 17 ist hierzu um beide Pflanzenäste 57 herumgeführt sowie durch zwei beabstandete Aufnahmeöffnungen 24 bzw. Schlitze hindurch, die derart angeordnet sind, dass durch Durchführen des Pflanzenfixierabschnittes 17 durch die Aufnahmeöffnungen 24 der durch die Drahteinführöffnung 23 einführbare Draht in der Aufnahme 22 des Drahtfixierabschnittes 18 gefangen wird bzw. ist.

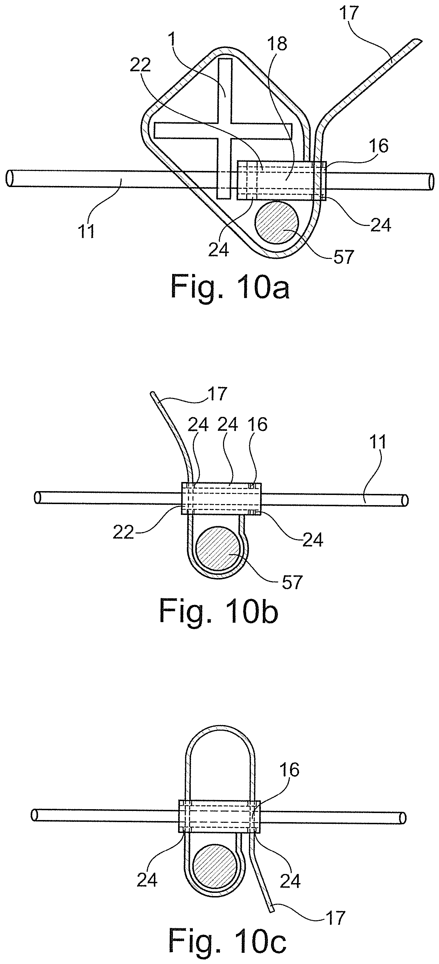

In den Fig. 10a bis 10c ist ein weiteres Ausführungsbeispiel einer Pflanzenspange 16 gezeigt. Auch diese umfasst einen mindestens eine als Schlitz bzw. Fixierschlitz ausgebildete Aufnahmeöffnung 24 zur Fixierung des flexiblen Pflanzenfixierabschnittes 17. Dieser ist bei dem Ausführungsbeispiel gemäß Fig. 10a um einen beispielhaft im Querschnitt kreuzförmigen Profilstab 1 herumgeführt sowie um einen sich in vertikaler Richtung erstreckenden Pflanzenast 57, der wiederum an dem Drahtfixierabschnitt 18 der Pflanzenspange 16 anliegt. Der Pflanzenfixierabschnitt 17 ist klemmend in der Aufnahmeöffnung 24 aufgenommen und der Draht 11 ist in der Aufnahme 22 gefangen.

Bei dem Ausführungsbeispiel gemäß Fig. 10b ist die Pflanzenspange 17, die ausgebildet ist wie in Fig. 10a an einem horizontal verlaufenden Draht 11 fixiert, in dem der Draht 11, der durch eine Drahteinführöffnung eingeführt wurde in eine Aufnahme 22 gefangen ist, indem der Pflanzenfixierabschnitt 17 unterhalb der Aufnahme 22 hindurchgeführt ist, nach Umschlingen eines sich vertikal orientierenden Pflanzenastes 57.

In Fig. 10c ist eine doppelte Sicherung der Pflanzenspange 16 gemäß Fig. 10b gezeigt, wobei hierzu der Pflanzenfixierabschnitt 17 durch zwei beabstandete, schlitzförmige Aufnahmeöffnungen 24 hindurchgeführt ist.

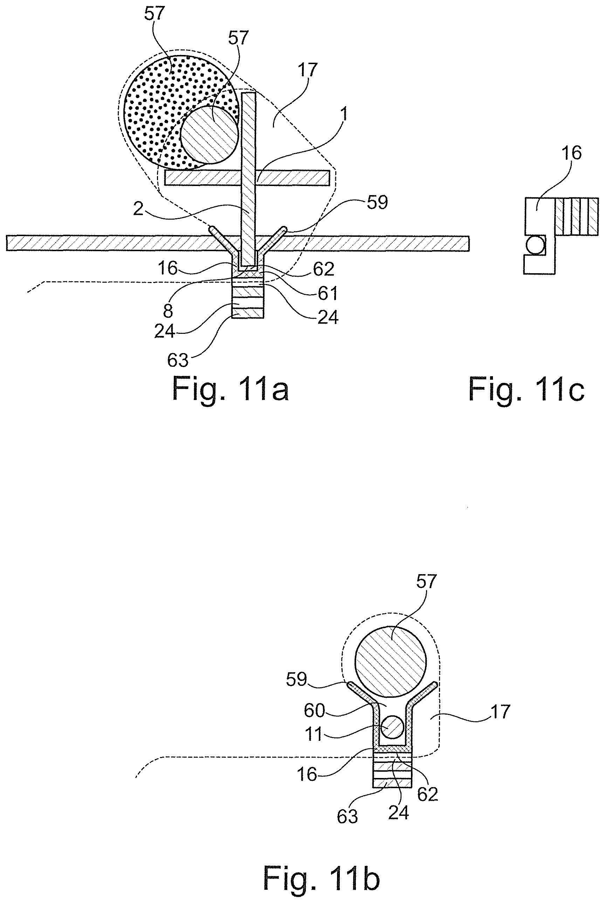

Ein besonders bevorzugtes Ausführungsbeispiel einer Pflanzenspange 16 ist in den Fig. 11a und 11b gezeigt. Die Pflanzenspange 16 umfasst einen Pflanzenfixierabschnitt-Bestigungsabschnitt 63 sowie einen sich davon weg erstreckenden Anlageabschnitt 59, der sich in eine Richtung von dem Pflanzenfixierabschnitt-Bestigungsabschnitt 63 weg verbreitert bzw. hin zum Pflanzenfixierabschnitt-Bestigungsabschnitt 63 verjüngt. Der Anlageabschnitt 59 weist also eine sich in Richtung Pflanzenfixierabschnitt-Bestigungsabschnitt 63 verjüngende bzw. verengende Öffnung 60 auf, die in einem hinteren bzw. unteren Bereich eine nutförmige Ausgestaltung aufweist, die als Abstützabschnitt 61 für einen Profilflächenabschnitt 2 eines Profilstabes 1 dient. Der Profilflächenabschnitt 2 stützt sich dabei mit seiner äußeren Längskante 8 am Grund 62 der Öffnung 60 ab. Gleichzeitig erstreckt sich ein biegbarer Pflanzenfixierabschnitt 17 ausgehend von dem Anlageabschnitt 49 um den Profilstab 1 herum und ist zurückgeführt in einen Bereich hinter den Anlageabschnitten 49, konkret in den Pflanzenfixierabschnitt-Bestigungsabschnitt 63 und ist dort durch eine Aufnahmeöffnung 24 (Schlitz) geführt, in der er geklemmt ist. Zu erkennen sind zwei im Wesentlichen parallele schlitzförmige Aufnahmeöffnungen 24 zur doppelten Sicherung des Pflanzenfixierabschnittes 17. In Fig. 11a ist das Pflanzenwachstum eines Pflanzenastes 57 symbolisiert. Wächst der Pflanzenast 57 im Durchmesser, wie dargestellt, zieht er selbsttätig den Pflanzenfixierabschnitt 17 etwas aus der Aufnahmeöffnung 24 heraus.

Fig. 11c zeigt eine mögliche Seitenansicht der Pflanzenspange 16 gemäß Fig. 11a.

In Fig. 11b ist die Pflanzenspange 16 identisch wie in Fig. 11a ausgebildet, jedoch hiervon unterschiedlich angeordnet. Zu erkennen ist, dass sich die Pflanzenspange 16 mit ihrem Anlageabschnitt 59 unmittelbar an einem Pflanzenast 57 abstützt, der von dem flexiblen Pflanzenfixierabschnitt 17 umspannt ist, welcher dann wiederum in einem Pflanzenfixierabschnitt-Befestigungsabschnitt 63, konkret in einer dort vorgesehenen, schlitzförmigen Aufnahmeöffnung 24 fixiert ist. Interessant ist, dass der Draht 11 sich in einem Bereich zwischen dem Pflanzenast 57 und dem Grund 62 der Öffnung 60 befindet und somit dort gefangen ist, da die Öffnung 60 durch den Pflanzenast 57 versperrt ist.

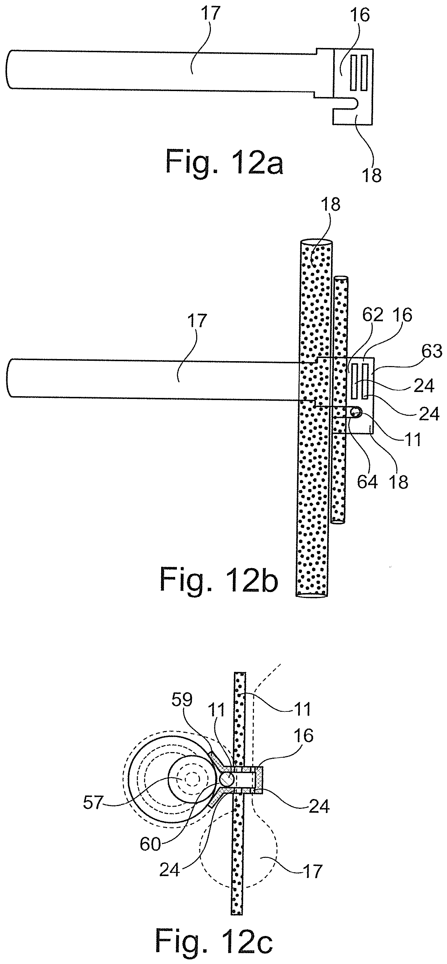

In den Fig. 12a bis 12c ist eine besonders bevorzugte Ausführungsform einer Pflanzenspange 16 gezeigt. Diese umfasst einen Drahtfixierabschnitt 18 mit einer als Drahtklemmnut ausgebildeten, seitlich offenen Drahtaufnahmenut 64, die von einem Draht 11 durchsetzt ist. Ein weiterer Draht 11 befindet sich innerhalb der Öffnung 60 des Anlageabschnittes 59, genauer dort zwischen dem Pflanzenast 57 und dem Grund 62 der Öffnung 60.

Unmittelbar benachbart zum Drahtfixierabschnitt 18, hinter dem Anlageabschnitt 59 befindet sich ein Pflanzenfixierabschnitt-Befestigungsabschnitt 63 mit hier beispielhaft und bevorzugt zwei schlitzförmigen Aufnahmeöffnungen 24 zur klemmenden Aufnahe des flexiblen Pflanzenfixierabschnittes 17 nach Umschlingen eines Pflanzenastes 57 und/oder eines Profilstabes 1.

Wie in Fig. 12c angedeutet, kann zur doppelten Sicherung der Pflanzenfixierabschnitt 17, quasi in einer Schleife durch beide Aufnahmeöffnungen 24 (Schlitze) geführt werden.

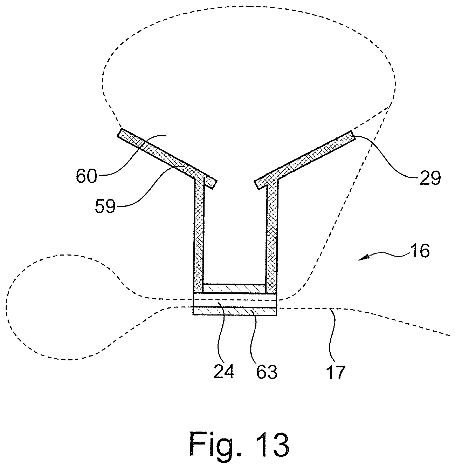

In Fig. 13 ist ein weiteres Ausführungsbeispiel einer bevorzugten Ausführungsform einer Pflanzenspange gezeigt, welches von seinem grundsätzlichen Aufbau her bevorzugt dem in den Fig. 12a bis 12c gezeigten Ausführungsbeispiel entspricht, auf welches hiermit zur Vermeidung von Wiederholungen verwiesen wird. Zu erkennen ist hier, dass die Pflanzenspange 16 in ihrem Pflanzenfixierabschnitt-Befestigungsabschnitt 63 eine einzige schlitzförmige Aufnahmeöffnung 24 für den Pflanzenfixierabschnitt 17 aufweist, wobei alternativ selbstverständlich auch mehrere, insbesondere zwei parallele solcher Aufnahmeöffnungen vorgesehen sein können. Wesentlich ist hier, dass der Pflanzenfixierabschnitt zweifach durch diese Aufnahmeöffnung 24 geführt ist und zwei in einander entgegengesetzte Richtungen, um hiermit eine optimale Fixierung zu erreichen - dadurch wird in der Zeichnungsebene links von der Aufnahmeöffnung eine Schlaufe gebildet. Die in den Fig. 12a bis 12c gezeigte Drahtaufnahmenut (dort Bezugszeichen 64) kann analog in einem Bereich benachbart des Pflanzenfixierabschnitt-Befestigungsabschnittes 63 vorgesehen sein, muss dies jedoch nicht zwingend, so dass auch eine Ausführungsform der Pflanzenspange gemäß Fig. 13 ohne eine solche Nut realisierbar ist.

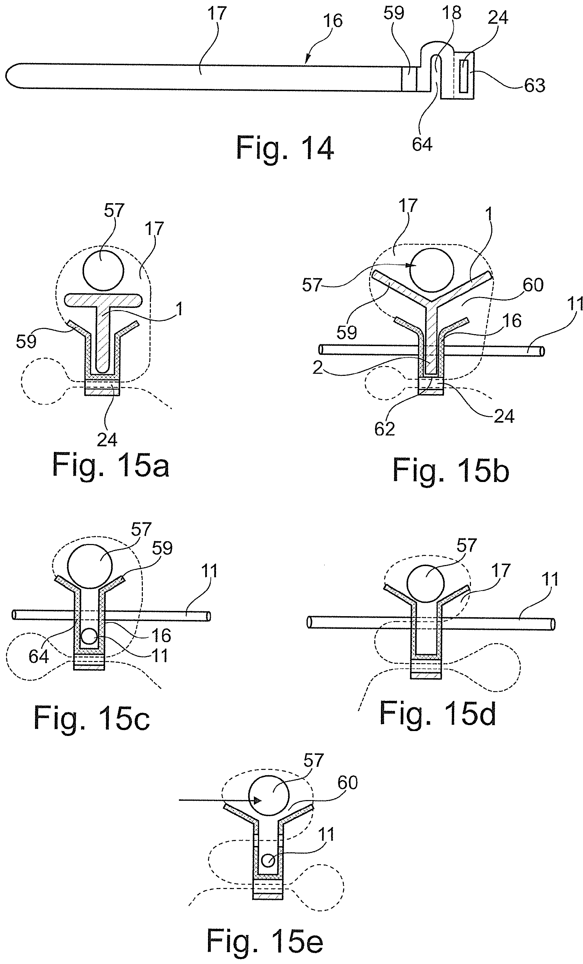

Eine besonders bevorzugte Ausführungsform einer Pflanzenspange 16, insbesondere zur Verwendung im Zusammenhang mit einem erfindungsgemäßen Profilstab 1 ist in Fig. 14 in einer Seitenansicht gezeigt. In einer Draufsicht von oben ist diese Pflanzenspange 16 in den Fig. 15a bis 15e dargestellt - im Folgenden wird in einer Zusammenschau der Fig. 14 sowie Fig. 15a bis 15e die Konstruktion bzw. der Aufbau sowie die Funktionsweise der Pflanzenspange 16 erläutert.

Zunächst ist zu erkennen, dass diese Pflanzenspange 16 einen Anlageabschnitt 59 aufweist, der dem Anlageabschnitt 59 der Ausführungsformen 11a bis 11c sowie 12a bis 12c und Fig. 13 entspricht, so dass diesbezüglich auch auf die voranstehende Figurenbeschreibung verwiesen wird.

Wesentlich ist nun, dass der Anlageabschnitt 59, der sich verbreiternd in eine Richtung von einem Pflanzenfixierabschnitt-Befestigungsabschnitt 63, aufweisend die Aufnahmeöffnung 24, weg erstreckt, benachbart angeordnet ist neben einem Drahtfixierabschnitt 18 in Form einer beispielhaft nach unten offenen Drahtaufnahmenut 64. Diese Drahtaufnahmenut 64 bzw. der Drahtfixierabschnitt 18 ist also sandwichartig aufgenommen zwischen dem sich in eine erste Richtung von dem Drahtfixierabschnitt 18 aufweitenden Anlageabschnitt 59 und dem Pflanzenfixierabschnitt-Befestigungsabschnitt 63, umfassend die Aufnahmeöffnung 24 zur klemmenden Fixierung des langgestreckten, biegbaren Pflanzenfixierabschnittes 17, welcher sich, wie bei den zuvor erläuterten Ausführungsbeispielen von dem Anlageabschnitt 59 weg erstreckt und einteilig mit diesem ausgebildet ist.

Zu erkennen ist, dass die sich von dem Drahtfixierabschnitt 18 weg erstreckende Öffnung 60 des Anlageabschnittes 59 sich in eine Richtung weg von dem Drahtfixierabschnitt 18 aufweitet. Die Öffnung 60 weist analog zu den vorhergehenden Ausführungsbeispielen einen Grund 62 auf, der einen verengten bzw. hinteren Öffnungsabschnitt begrenzt, in welchen, wie dies in Fig. 15b dargestellt ist, ein Profilflächenabschnitt 2 eines Profilstabes hineinragen kann, um sich an dem Grund 62 abzustützen. Der Draht 11 erstreckt sich im montierten Zustand durch die nach unten offene Drahtaufnahmenut 64 und ist im montierten Zustand somit zwischen der Öffnung 24 und dem Anlageabschnitt 59 angeordnet.

Die Fig. 15a bis 15e zeigen verschiedene Anwendungsmöglichkeiten der Pflanzenspange 16. Gemeinsam ist diesen, dass der Pflanzenfixierabschnitt 17 unterhalb eines Drahtes 11 entlanggeführt ist, nachdem ein Profilstab und/oder ein Pflanzenast bzw. eine Pflanze 57 umschlungen wurde und dann durch die Aufnahmeöffnung 24 geführt und in dieser geklemmt ist. Der Pflanzenfixierabschnitt 17 sichert somit die Pflanzenspange 16 am Draht 11 - die Pflanzenspange 16 kann erst wieder entnommen bzw. entfernt werden nach Lösen des Pflanzenfixierabschnittes 17 aus der Aufnahmeöffnung 24. Zu erkennen ist, dass der Pflanzenfixierabschnitt 17 jeweils zweimal durch dieselbe Aufnahmeöffnung 24 unter Bildung einer kleinen Schlaufe geführt ist, und zwar aus einander entgegengesetzten Richtungen, um somit eine optimale Fixierung bzw. Klemmwirkung zu erreichen und gleichzeitig genügend Spielraum für die Pflanze 57 zu lassen, die bei einem dicken Wachstum selbsttätig den Pflanzenfixierabschnitt 17 nachziehen kann, ohne die Verbindung jedoch selbsttätig lösen zu können.

In Fig. 15b verlaufen die Pflanze 57 bzw. der Pflanzenast vertikal, ebenso wie der Profilstab 1 und der Draht 11 erstreckt sich senkrecht dazu in einer Horizontalebene.

Auch in Fig. 15c ist ein vertikal ausgerichteter Pflanzenast gezeigt, an dem die Pflanzenspange 16 mit ihrem Anlageabschnitt 59 unmittelbar anliegt. Ein Draht 11 befindet sich in der Drahtaufnahmenut 64, die bevorzugt als Klemmnut ausgebildet ist - ein weiterer, senkrecht zu dem vorgenannten Draht 11 verlaufenden Draht 11 ist im unteren bzw. engeren Öffnungsabschnitt der Öffnung 60 aufgenommen und dort gefangen - die Öffnung 60 ist von der Pflanze 57 verschlossen.

In Fig. 15d ist zu erkennen, dass der Pflanzenfixierabschnitt 17 wieder unter dem Draht 11 hindurchgeführt ist. Die gezeigte Pflanze 57 bzw. der gezeigte Pflanzenast verläuft bevorzugt vertikal.

Fig. 15e zeigt eine horizontale Ausrichtung eines Pflanzenastes bzw. der Pflanze 57 - auch der Draht 11 verläuft horizontal und ist nicht in der Drahtaufnahmenut 64 aufgenommen, sondern gefangen in dem engeren, bevorzugt im Querschnitt U-förmigen (hinteren) Öffnungsabschnitt der Öffnung 60.

In Fig. 15a ist lediglich exemplarisch ein T-förmiger Profilstab 1 gezeigt, der in die Öffnung 60 des Anlageabschnitts 59 hineinragt.

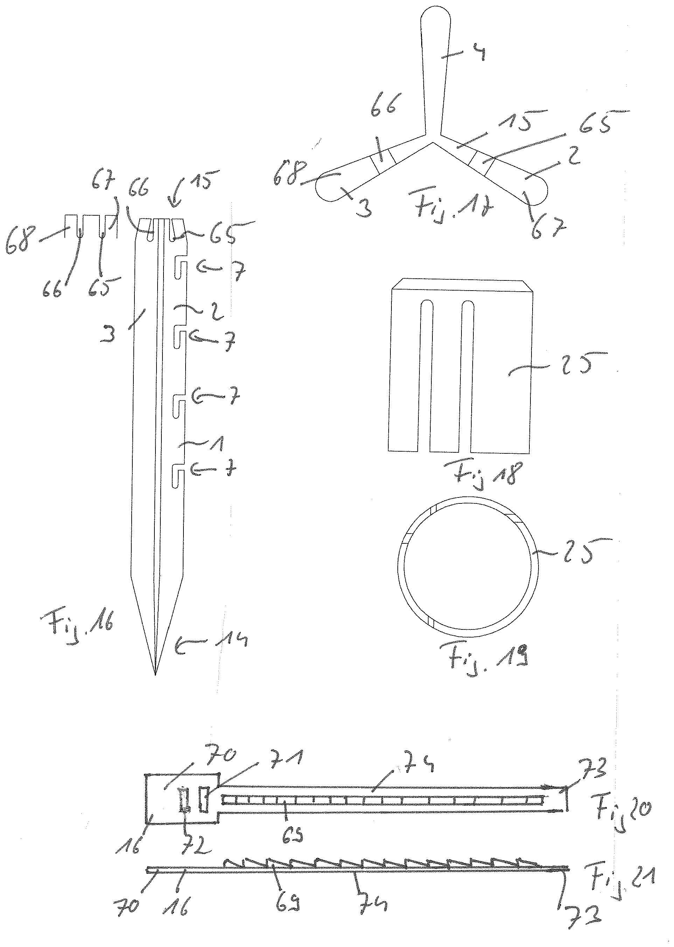

In Fig. 16 ist ein besonders bevorzugtes Ausführungsbeispiel eines erfindungsgemäßen Profilstabes 1 gezeigt. Zur Vermeidung von Wiederholungen wird im Folgenden im Wesentlichen auf die Unterschiede zu dem im Zusammenhang mit dem vorstehenden Ausführungsbeispiel erläuterten Profilstab 1 eingegangen. Im Hinblick auf die Gemeinsamkeiten wird auf vorstehende Figurenbeschreibung mit zugehörigen Figuren verwiesen.

Der Profilstab 1 umfasst drei um 120° in Umfangsrichtung versetzt angeordnete Profilflächenabschnitte 2, 3, 4, die in Fig. 17 in einer Draufsicht gezeigt sind. In der von der Spitze 14 abgewandten oberen bzw. hinteren Stirnseite 15 befinden sich in zwei der Profilabschnitte 2, 3 jeweils eine Vertiefung 65, 66, die radial außen von jeweils einer Wange 67, 68 begrenzt sind. In die Vertiefungen 65, 66 kann ein nicht gezeigter Draht von oben eingelegt werden. Die Wangen 67, 68 sind aus einer in Fig. 16 links gezeigten ursprünglichen Position nach radial innen umbiegbar (vgl. Fig. 16 rechts) um einen in einer Vertiefung 65, 66 aufgenommenen Draht zu fixieren, d. h. zu klemmen.

In den Fig. 18 und 19 ist ein für einen Profilstab gemäß den Fig. 16, 17 bestimmtes Abschlussprofilelement 25 gezeigt. Im Hinblick auf dessen Funktion und die allgemeinen Merkmale wird auf vorstehende Figurenbeschreibung zzgl. Figur verwiesen. Zu erkennen ist, dass als Abschlusskappe ausgebildete Abschlussprofilelement, welches bevorzugt als Kunststoff ausgebildet ist, eine Vielzahl von seitlichen, einseitig offenen Einführschlitzen zur Aufnahme eines Drahtes aufweist, der sich in einer der oberen Vertiefungen 65, 66 (vgl. Fig. 16 und 17) befindet.

In den Fig. 20 und 21 ist eine alternative Ausführungsform einer erfindungsgemäßen Pflanzenspange 16 gezeigt. Bei dieser handelt es sich um ein Kunststoffbauteil, welches monolithisch ausgebildet ist. Die Pflanzenspange 16 ist lang gestreckt bzw. streifenförmig ausgebildet und flexibel biegbar. Die Pflanzenspange 16 umfasst eine Vielzahl von hintereinander angeordneten Widerhakenelemente 69, die entlang der Längserstreckung der Pflanzenspange 16 aufgereiht sind. Ferner umfasst die Pflanzenspange 16 in einem endseitigen Befestigungsabschnitt 70, hier beispielhaft zwei (mindestens eine) Öffnungen 71, 72 zum Durchführen eines vorderen, von dem Befestigungsabschnitt 70 abgewandten Einführendes 73. Beim Durchziehen des die Widerhakenelemente 69 aufweisenden Pflanzenfixierabschnitts 74 durch mindestens eine der Öffnungen 71, 72 gleiten die Widerhakenelemente mit ihrer jeweiligen Schräge entlang des Umfangsrandes der mindestens einen Öffnung 71, 72, wobei die mindestens eine Öffnung 71, 72 so auf die Geometrie der Widerhakenelemente 69 abgestimmt ist, dass dieser Fixiervorgang einen gewissen Kraftaufwand verursacht. Der Kraftaufwand bzw. der zu überwachende Widerstand zum Lösen der Pflanzenspange, d.h. zum Zurückbewegen des Pflanzenfixierabschnittes bzw. der Widerhakenelemente 69 durch mindestens eine der Öffnungen 71, 72 ist dabei größer bemessen als der Kraftaufwand zum Schließen der Pflanzenspange. Der zu überwindende Lösewiderstand ist so bemessen, dass die Pflanze, insbesondere eine Gemüsepflanze diesen Kraftaufwand selbsttätig beim Wachstumsprozess durch eine entsprechende Volumenvergrößerung aufbringt und somit die Pflanzenspange selbsttätig in dem entsprechenden Maß aufweitet.

### Bezugszeichen

- 1: Profilstab
- 2: Profilflächenabschnitt (erster)
- 3: Profilflächenabschnitt
- 4: Schnittlinie
- 5: Profilflächenabschnitt
- 6: Profilflächenabschnitt
- 7: Haken
- 8: äußere Längskante
- 9: Aussparung
- 10: Längskantenabschnitt
- 11: Draht
- 12: Einstecköffnung
- 13: Aussparungsgrund
- 14: Spitze
- 15: Stirnseite
- 16: Pflanzenspange
- 17: Pflanzenfixierabschnitt
- 18: Drahtfixierabschnitt(e)
- 19: Rastabschnitt (Rastlasche)
- 20: Pflanze
- 21: Drahtfixierabschnitt
- 22: Aufnahme
- 23: Drahteinführöffnung
- 24: Aufnahmeöffnung
- 25: Abschlussprofilelement
- 26: Kopfabschnitt
- 27: Einführschlitz
- 28: Einführschlitz
- 29: Einführschlitz
- 30: Einführschlitz
- 31: Axialfortsatz
- 32: Axialfortsatz
- 33: Axialfortsatz
- 34: Axialfortsatz
- 35: Pfeilrichtung
- 36: Rastfortsatz
- 37: Rastfortsatz
- 38: Öffnung(en)
- 39: Innengewindedurchgangsöffnung
- 40: Einschlagvorrichtung
- 41: Einführabschnitt
- 42: Axialanschlag
- 43: Aufschlagabschnitt
- 44: Aufschlagfläche
- 45: Fortsätze
- 46: Einführschlitze
- 47: Erdankervorrichtung
- 48: Ankerprofil
- 49: Halteprofil
- 50: Durchgangsöffnung
- 51: Kopfschraube
- 52: Außengewinde
- 53: Schaft
- 54: Durchgangsöffnung
- 55: Innengewindeelement
- 56: Sperrscheibe
- 57: Pflanze
- 58: Seitentriebe
- 59: Anlageabschnitt
- 60: Öffnung
- 61: Abstützabschnitt
- 62: Grund
- 63: Pflanzenfixierabschnitt-Befestigungsabschnitt
- 64: Drahtaufnahmenut
- 65: Vertiefung
- 66: Vertiefung
- 67: Wange
- 68: Wange
- 69: Widerhakenelement
- 70: Befestigungsabschnitt
- 71: Öffnung
- 72: Öffnung
- 73: Einführen
- 74: Pflanzenfixierabschnitt

- L: Längsachse
- Z: Zentralachse

## Patentansprüche

1. Profilstab zum Aufbau eines Drahtrahmens im Wein-, Obst- oder Gemüseanbau, mit mindestens einem in den sich entlang einer Längsachse erstreckenden Profilstab (1) eingeformten Haken (7) zum Einhängen eines Drahtes (11) für die Befestigung einer Pflanze (20), insbesondere einer Weinrebe,
**dadurch gekennzeichnet,**
**dass** der, bevorzugt als Strangpressprofil ausgebildete, Profilstab (1) aus Metall ausgebildet ist und in einer Querschnittsansicht T-, Y- oder kreuzförmig ausgebildet und mit mindestens drei, insbesondere vier, winklig zueinander angeordneten und sich entlang der Längsachse (L) erstreckende Profilflächenabschnitte (2, 3, 5, 6) aufweist, und dass der Haken (7) an einer äußeren ersten Längskante (8) eines ersten (2) der Profilflächenabschnitte ausgebildet ist und eine seitlich offene Aussparung (9) umfasst, die außen begrenzt ist von einem zum Klemmen eines in die Aussparung (9) eingelegten Drahtes (11) nach innen umbiegbaren Längskantenabschnitt (10) der ersten Längskante (8).

2. Profilstab nach Anspruch 1,
**dadurch gekennzeichnet,**
**dass** an der äußeren ersten Längskante (8) des ersten Profilflächenabschnittes (2) mehrere in Richtung der Längsachse beabstandete Haken (7) eingeformt sind, die jeweils eine seitlich offene Aussparung (9) umfassen, die jeweils außen begrenzt ist von einem zum Klemmen eines in die jeweilige Aussparung (9) eingelegten Drahtes (11) nach innen umbiegbaren Längskantenabschnitt (10) der ersten Längskante (8).

3. Profilstab nach einem der vorhergehenden Ansprüche,
**dadurch gekennzeichnet,**
**dass** der Profilstab (1) in einem vorderen Bereich angespitzt ist, derart, dass die Längskanten der winklig zueinander angeordneten Profilflächenabschnitte (2, 3, 5, 6) geneigt zur Längserstreckung des Profilstabes (1) nach innen hin auf ein gemeinsames Zentrum verlaufen und/oder dass die Profilflächenabschnitte (2, 3, 5, 6) in einem radial äußeren Bereich eine größere, in Umfangsrichtung gemessene Wandstärke aufweisen als in einem radial inneren Bereich, wobei bevorzugt der Übergang zwischen dem radial äußeren Bereich alternativ stetig oder gestuft ausgestaltet ist.

4. Profilstab nach einem der vorhergehenden Ansprüche,
**dadurch gekennzeichnet,**
**dass** in einer äußeren zweiten und/oder dritten und/oder vierten Längskante des zweiten bzw. dritten bzw. vierten der Profilflächenabschnitte (3, 5, 6) mindestens ein Haken (7), bevorzugt mehrere in Richtung der Längsachse beabstandete Haken (7) eingeformt ist/sind, der/die jeweils eine seitlich offene Aussparung (9) umfasst/umfassen, die jeweils außen begrenzt ist von einem zum Klemmen eines in die jeweilige Aussparung (9) eingelegten Drahtes (11) nach innen umbiegbaren Längskantenabschnitt (10) der zweiten bzw. dritten bzw. vierten Längskante.

5. Profilstab nach einem der vorhergehenden Ansprüche,
**dadurch gekennzeichnet,**
**dass** in mindestens einem der Profilflächenabschnitte (2, 3, 5, 6), bevorzugt in einem hinteren Abschnitt eine, vorzugsweise umfangsgeschlossene, Öffnung (38) eingebracht ist zum Verrasten eines Abschlussprofilelementes (25).

6. Profilstab nach einem der vorhergehenden Ansprüche,
**dadurch gekennzeichnet,**
**dass** eine in Umfangsrichtung gemessene Dickenerstreckung der Profilflächenabschnitte (2, 3, 5, 6) von radial außen nach radial innen betrachtet hin zu einer, vorzugsweise mit einer Längsmittelachse des Profilstabes zusammenfallenden, Zentralachse abnimmt.

7. Profilstab nach einem der vorhergehenden Ansprüche,
**dadurch gekennzeichnet,**
**dass** der Profilstab (1) stirnseitig auf der von einer Spitze (14) abgewandten Stirnseite (15) in mindestens einem der Profilflächenabschnitte (2, 3, 5), bevorzugt in mindestens zwei der Profilflächenabschnitte (2, 3, 5) eine Vertiefung (65, 66) zum Einlegen eines Drahtes (11) aufweist, wobei bevorzugt eine äußere, die Vertiefung (65, 66) begrenzende Wanne zum Klemmen eines eingelegten Drahtes (11) in der Vertiefung (65, 66) umbiegbar ist.

8. Abschlussprofilelement (25), insbesondere aus Kunststoff, bevorzugt einteiliges Kunststoffspritzgussteil, zur Montage auf einem im Querschnitt T-, Y- oder kreuzförmigen, aus einer Leichtmetalllegierung ausgebildeten, mindestens drei, insbesondere genau drei oder genau vier, winklig zueinander angeordnete und sich entlang einer Längsachse erstreckende Profilflächenabschnitte (2, 3, 5, 6) aufweisenden Profilstab (1) nach einem der vorhergehenden Ansprüche, zum Aufbau eines Drahtrahmens im Wein-, Obst- oder Gemüseanbau, wobei das Abschlussprofilelement mehrere Axialfortsätze (31, 32, 33, 34) zum axialen Einführen in jeweils einen Umfangsbereich zwischen jeweils zwei der Profilflächenabschnitte (2, 3, 5, 6) des Profilstabes (1) aufweist und wobei zwischen jeweils zwei der Axialfortsätze (31, 32, 33, 34) ein Einführschlitz zum axialen Einführen eines der Profilflächenabschnitte (2, 3, 5, 6) sowie eines Drahtes (11) ausgebildet ist, und wobei mindestens einer der Axialfortsätze (31, 32, 33, 34) eine größere Axialerstreckung aufweist als mindestens ein anderer der Axialfortsätze (31, 32, 33, 34) um dadurch einen seitlichen Anschlag für einen Draht (11) beim Einfädeln des Drahtes (11) zu bilden.

9. Erdankervorrichtung (47) zum Fixieren und Spannen eines mit einem Profilstab (1) nach einem der Ansprüche 1 bis 7 haltbaren Drahts (11), umfassend ein, vorzugsweise als Flachprofil, ausgebildetes Ankerprofil (48) sowie mit einer Durchgangsöffnung (50), durch die einen Schraubenkopf aufweisende Kopfschraube (51) geführt ist, die eine sich winklig, insbesondere senkrecht zur Schaftlängserstreckung eines Schaftes (53) der Kopfschraube (51) erstreckende Durchgangsöffnung (54) zum Durchführen des Drahtes (11) aufweist und der zum Klemmen des Drahtes (11) ein Innengewindeelement (55) zugeordnet ist.

10. Einschlagvorrichtung zum Einschlagen eines Profilstabes (1) nach einem der Ansprüche 1 bis 7 in das Erdreich, mit einem eine Schlagfläche ausbildenden Aufschlagabschnitt (43), mit einem Axialanschlag zum axialen Abstützen an einer hinteren Stirnseite des Profilstabes und zum Eintragen einer auf den Aufschlagabschnitt (43) ausgeübten Schlagkraft in den Profilstab (1) und mit einem sich axial ausgehend von dem Axialanschlag (42) erstreckenden Einhängeabschnitt zum axialen Einhängen der Einschlagvorrichtung (40) in den Profilstab (1), wobei der Einhängeabschnitt mindestens einen Spalt zur Aufnahme (22) eines der Profilflächenabschnitte (2, 3, 5, 6) aufweist.

11. Pflanzenspange zum Festlegen einer Pflanze (20), insbesondere einer Weinrebe, an einem Draht (11), der mit einem Profilstab (11) nach einem der Ansprüche 1 bis 7 gehalten ist, wobei die Pflanzenspange (16) mindestens einen Drahtfixierabschnitt (18, 21) zum Durchführen des Drahtes (11) und einen biegbaren, vorzugsweise einteilig, mit dem Drahtfixierabschnitt (18, 21) ausgebildeten Pflanzenfixierabschnitt (17) zum Umschlingen der Pflanze (20) aufweist.

12. Pflanzenspange, insbesondere nach einem der Anspruch 11,
**dadurch gekennzeichnet,**
**dass** die, vorzugsweise aus Kunststoff, noch weiter bevorzugt als Kunststoffspritzgussteil ausgebildete Pflanzenspange (16) einen sich, bevorzugt konisch, verbreiternden Anlageabschnitt (59) zur alternativen Anlage an einem Pflanzenast (57) oder einen Profilstab (57) nach einem der Ansprüche 1 bis 7, bevorzugt an dessen Längskante, aufweist sowie einen flexiblen, insbesondere bandförmigen und sich bevorzugt ausgehend von dem Anlageabschnitt (59) weg erstreckenden Pflanzenfixierabschnitt (17) zum Umspannen eines Pflanzenastes (57) und/oder des Profilstabes (1) sowie mindestens einen bevorzugt als Schlitz ausgebildete Aufnahmeöffnung (24), bevorzugt zwei, ganz besonders bevorzugt parallele, Aufnahmeöffnungen (24), zum bevorzugt klemmenden, Fixieren des Pflanzenfixierabschnitts (17).

13. Drahtrahmenbausystem für Wein-, Obst- oder Gemüseanbau, umfassend einen Profilstab (1) nach einem der Ansprüche 1 bis 7 zum Halten mindestens eines Drahtes (11) und einen, insbesondere auf einem Profilstab (1) montiertes, insbesondere verrastetes, Abschlussprofilelement (25) nach Anspruch 8 und eine Erdankervorrichtung (47) nach Anspruch 9 zum Spannen des Drahtes (11) und eine Einschlagvorrichtung (40) gemäß Anspruch 10 und eine Pflanzenspange (16) nach Anspruch 11 oder 12 zum Fixieren einer Pflanze (20), insbesondere einer Weinrebe an dem Draht (11).

14. Drahtrahmenbausystem nach Anspruch 13, **dadurch gekennzeichnet, dass** sich die Pflanzenspange (16) mit ihrem Anlageabschnitt (59) an einer Längskante des Profilstabes (1) abstützt und der Pflanzenfixierabschnitt (17) um den Profilstab (1) insbesondere mit zwischen zwei Profilflächenabschnitten (2, 3, 5, 6) aufgenommenem Pflanzenast (57) herumgeführt und in dem mindestens einen Schlitz, bevorzugt klemmend fixiert ist, oder dass an dem Grund (62) der Öffnung (60) des Anlageabschnitts (59) ein Draht (11) anliegt und sich der Anlageabschnitt (59) an einem Pflanzenast (57) abstützt und der Pflanzenfixierabschnitt (17) um den Pflanzenast (57) herumgeführt und in dem mindestens einen Schlitz, vorzugsweise klemmend, fixiert ist.

## Claims

1. Profile bar for constructing a wire frame in wine, fruit or vegetable growing, with at least one hook (7) molded into the profile bar (1) extending along a longitudinal axis for hanging a wire (11) for attachment of a plant (20), in particular a grapevine,
**characterized in that**,
the profile bar (1) preferably formed as an extrusion-moided profile, is formed of metal, and has of a T-, Y- or a cross-shaped design in a cross-sectional view, and comprises at least three, in particular four profile surface portions (2, 3, 5, 6), arranged angularly to each other and extending along the longitudinal axis (L), and **in that** the hook (7) is formed on an outer first longitudinal edge (8) of a first (2) of the profile surface sections, and includes a laterally open recess (9), which is externally delimited by a inwardly bendable longitudinal edge section (10) of the first longitudinal edge (8) inserted for clamping a wire (11) inserted in the recess (9).

2. Profile bar according to claim 1,
**characterized in that**
multiple hooks (7) spaced apart in the direction of the longitudinal axis are molded on the outer first longitudinal edge (8) of the first profiled surface portion (2), each comprising a laterally-open recess (9), each of which is externally delimited by an inwardly bendable longitudinal edge portion (10) of the first longitudinal edge (8) for the clamping of a wire (11) inserted in the respective recess (9).

3. Profile bar according to one of the preceding claims,
**characterized in that**
the profile bar (1) has a point in a forward region, such that the longitudinal edges of the profile surface portions (2, 3, 5, 6) arranged angularly to each other, extend inclined relative to the longitudinal extension of the profile bar (1) extend inclined inwards towards the longitudinal extension of the profile bar (1) and towards a common center, and/or that the profile surface portions (2, 3, 5, 6) in a radially outer region have a greater wall thickness measured in the circumferential direction than in a radially inner region, wherein preferably the junction between the radially outer region is alternatively of continuous or stepped design .

4. Profile bar according to one of the preceding claims,
**characterized in that**
in an outer second, and/or third, and/or fourth profiles longitudinal edge of the second or third or fourth of the profile surface portion (3, 5, 6) has at least one hook (7), preferably a plurality of hooks (7) spaced apart in the direction of the longitudinal axis molded therein, which each have a laterally-open recess (9) which is in each case delimited externally by an inwardly bendable longitudinal edge portion (10) of the second, or third, or fourth longitudinal edge for the clamping of a wire (11) inserted in the respective recess (9).

5. Profile bar according to one of the preceding claims,
**characterized in that**
a preferably circumferentially-closed opening (38) is introduced in at least one of the profiled surface portions (2, 3, 5, 6), preferably in a rear portion, for the latching of an end profile element (25).

6. Profile bar according to one of the preceding claims,
**characterized in that**
viewed from radially outward to radially inward, a thickness extension of the profile surface portions (2, 3, 5, 6) measured in circumferential direction, decreases towards a central axis preferably coinciding with a longitudinal central axis of the profile bar.

7. Profile bar according to one of the preceding claims,
**characterized in that**
in at least one of the profile surface portions (2, 3, 5), preferably in at least two of the profile surface portions (2, 3, 5), the profile bar (1), on the face side (15) facing away from a tip (14), comprises a depression (65, 66) for inserting a wire (11), wherein preferably an outer trough delimiting the recess (65, 66) can be bend for the clamping of an inserted wire (11) in the recess (65, 66).

8. End profile element (25), in particular consisting of plastic, preferably a one-piece plastic injection-molded part, for the mounting on a cross-sectional T-, Y- or cross-shaped, profile bar (1) formed of a light metal alloy and comprising at least three, in particular exactly three or exactly four profile surface sections (2, 3, 5, 6) arranged angularly to each other and extending along a longitudinal axis according to one of preceding claims, for constructing a wire frame in viticulture, fruit and vegetable growing, wherein the end profile element comprises multiple axial extensions (31, 32, 33, 34) for the for axial insertion in in each case one peripheral region between in each case two of the profile surface portions (2, 3, 5, 6) of the profile bar (1), and wherein an insertion slot is formed between in each case two of the axial studs (31, 32, 33, 34), for the axial insertion of one of the profile surface portions (2, 3, 5, 6), as well as of a wire (11), and wherein at least one of the axial studs (31, 32, 33, 34) has a greater axial extension than at least one other of the axial studs (31, 32, 33, 34) to thereby form a lateral stop for a wire (11) upon threading of the wire (11).

9. Ground anchoring device (47) for fixing and clamping a wire (11) retainable with a profile bar (1) according to one of claims 1 to 7, comprising an anchor profile (48), preferably formed as a flat profile, and having a through-opening (50), through which a head screw (51) comprising a screw head is guided, said head screw comprising a through-opening (54) extending angularly, in particular perpendicularly to the shaft longitudinal extension of a shaft (53) of the headscrew (51) extending for guiding the wire (11), and which has a female threaded element (55) assigned to it for clamping the wire (11).

10. Crust-breaking device according to one of claims 1 to 7 for striking a profile bar (1) into the ground, with a striking section (43), forming a striking surface, with an axial stop for the axial support on a rear end side of the profile bar, and to introduce an impact force exerted on the impact section (43) into the profile bar (1), and with a hanging section extending axially from the axial stop (42), for axially suspending the crust-breaking device (40) in the profile bar (1), wherein the hanging section comprises at least one gap for the reception (22) one of the profile surface portions (2, 3, 5, 6).

11. Plant clasp for securing a plant (20), in particular a grapevine, to a wire (11), which is held with a profile bar (11) according to one of claims 1 to 7, wherein the plant clasp (16) comprises at least one wire-securing section (18, 21) for guide-through of the wire (11), and a bendable plant-securing section (17) preferably formed integral with the wire-securing section (18, 21) formed for winding around the plant (20).

12. Plants clasp, in particular according to one of Claim 11,
**characterized in that**
the plant clasp (16), preferably formed from plastic, even more preferably configured as a plastic injection-molded part, has an abutment portion (59), preferably widening conically, for the alternative resting against a plant branch (57) or a profile bar (57) according to one of claims 1 to 7, preferably on the longitudinal edge thereof, also comprising a flexible, in particular strip-shaped plant-securing section (17) preferably extending away starting from the abutment portion (59) for spanning around a plant branch (57) and/or the profile bar (1), as well as at least one receiving opening (24), preferably two receiving openings (24) preferably formed as a slot, most preferably parallel, preferably for securing of the plant-securing section (17), preferably in clamping manner.

13. Wire framing constructing system for growing wine, fruit or vegetables, comprising a profile bar (1) according to one of claims 1 to 7 for holding at least one wire (11) and an end profile element (25) according to claim 8, in particular mounted on a profile bar (1), in particular latched, and a ground anchoring device (47) according to claim 9 for clamping the wire (11), and a crust-breaking device (40) according to claim 10, and a plant clasp (16) according to claim 11 or 12 for fixing a plant (20), particularly a grapevine, to the wire (11).

14. Wire framing construction system according to claim 13, **characterized in that** the plant clasp (16), with its abutment portion (59) supports itself on a longitudinal edge of the profile bar (1), and the plant-securing section (17) is wound around the profile bar (1), in particular with the plant branch (57) received between two profile surface sections (2, 3, 5, 6), and is preferably fixed in position by being clamped, in the at least one slot, or **in that** a wire (11) rests against the base (62) of the opening (60) of the abutment portion (59), and **in that** the abutment portion (59) rests on a plant branch (57), and **in that** the plant-securing section (17) is guided around the plant branch (57) and, is fixed in position in the at least one slot, preferably in a clamped manner.

## Revendications

1. Barre profilée pour la construction d'un cadre en fil métallique pour la viticulture, l'arboriculture fruitière ou la culture maraîchère, comprenant au moins un crochet (7) formé dans la barre profilée (1) s'étendant le long d'un axe longitudinal, pour accrocher un fil métallique (11) pour la fixation d'une plante (20), en particulier d'une vigne, **caractérisée en ce que** la barre profilée (1) réalisée de préférence sous forme de profilé filé, est réalisée en métal et est réalisée en vue en coupe transversale en forme de T, de Y ou en forme de croix, et présente au moins trois, notamment quatre, portions de surface profilées (2, 3, 5, 6) disposées suivant un certain angle les unes par rapport aux autres et s'étendant le long de l'axe longitudinal (L), et **en ce que** le crochet (7) est réalisé au niveau d'une première arête longitudinale extérieure (8) d'une première (2) des portions de surface profilées et comprend un évidement ouvert latéralement (9) qui est limité à l'extérieur par une portion d'arête longitudinale (10) de la première arête longitudinale (8), repliable vers l'intérieur, pour le serrage d'un fil métallique (11) introduit dans l'évidement (9).

2. Barre profilée selon la revendication 1, **caractérisée en ce qu'**au niveau de la première arête longitudinale extérieure (8) de la première portion de surface profilée (2) sont formés plusieurs crochets (7) espacés dans la direction de l'axe longitudinal, lesquels comprennent à chaque fois un évidement (9) ouvert latéralement, qui est limité à chaque fois à l'extérieur par une portion d'arête longitudinale (10) de la première arête longitudinale (8), repliable vers l'intérieur, pour le serrage d'un fil métallique (11) introduit dans l'évidement respectif (9).

3. Barre profilée selon l'une quelconque des revendications précédentes, **caractérisée en ce que** la barre profilée (1) est façonnée en pointe dans une région avant, de telle sorte que les arêtes longitudinales des portions de surface profilées (2, 3, 5, 6) disposées suivant un certain angle les unes par rapport aux autres s'étendent de manière inclinée par rapport à une étendue longitudinale de la barre profilée (1) vers l'intérieur vers un centre commun et/ou **en ce que** les portions de surface profilées (2, 3, 5, 6) présentent, dans une région radialement extérieure, une plus grande épaisseur de paroi mesurée dans la direction périphérique que dans une région radialement intérieure, la transition entre la région radialement extérieure étant de préférence réalisée en alternance de manière continue ou de manière étagée.

4. Barre profilée selon l'une quelconque des revendications précédentes, **caractérisée en ce qu'**au moins un crochet (7), de préférence plusieurs crochets (7) espacés dans la direction de l'axe longitudinal, est/sont formés dans une deuxième et/ou une troisième et/ou une quatrième arête longitudinale extérieure de la deuxième ou de la troisième ou de la quatrième portion de surface profilée (3, 5, 6), lequel/lesquels crochet(s) comprend/comprennent à chaque fois un évidement ouvert latéralement (9) qui est à chaque fois limité à l'extérieur par une portion d'arête longitudinale (10) de la deuxième, ou de la troisième, ou de la quatrième, arête longitudinale, repliable vers l'intérieur, pour serrer un fil métallique (11) introduit dans l'évidement respectif (9).

5. Barre profilée selon l'une quelconque des revendications précédentes, **caractérisée en ce que** dans au moins l'une des portions de surface profilées (2, 3, 5, 6), de préférence dans une portion arrière, est pratiquée une ouverture (38), de préférence fermée sur la périphérie, pour l'encliquetage d'un élément profilé de terminaison (25).

6. Barre profilée selon l'une quelconque des revendications précédentes, **caractérisée en ce que** une étendue dans le sens de l'épaisseur, mesurée dans la direction périphérique, des portions de surface profilées (2, 3, 5, 6), considérée radialement depuis l'extérieur vers l'intérieur, diminue vers un axe central coïncidant de préférence avec un axe médian longitudinal de la barre profilée.

7. Barre profilée selon l'une quelconque des revendications précédentes, **caractérisée en ce que** la barre profilée (1) présente frontalement, sur le côté frontal (15) opposé à une pointe (14) dans au moins l'une des portions de surface profilées (2, 3, 5), de préférence dans au moins deux des portions de surface profilées (2, 3, 5), un renfoncement (65, 66) pour introduire un fil métallique (11), un berceau extérieur limitant le renfoncement (65, 66) pouvant être replié pour serrer un fil métallique introduit (11) dans le renfoncement (65, 66).

8. Élément profilé de terminaison (25), en particulier en plastique, de préférence pièce moulée par injection de plastique monobloc, pour le montage sur une barre profilée (1) réalisée en forme de T, de Y ou en forme de croix en section transversale, constituée d'un alliage en métal léger, présentant au moins trois, notamment exactement trois ou exactement quatre, portions de surface profilées (2, 3, 5, 6) disposées suivant un certain angle les unes par rapport aux autres et s'étendant le long d'un axe longitudinal selon l'une quelconque des revendications précédentes, pour la construction d'un cadre en fil métallique pour la viticulture, l'arboriculture fruitière ou la culture maraîchère, l'élément profilé de terminaison présentant plusieurs saillies axiales (31, 32, 33, 34) pour l'introduction axiale à chaque fois dans une région périphérique entre deux des portions de surface profilées (2, 3, 5, 6) de la barre profilée (1) et une fente d'insertion étant réalisée à chaque fois entre deux des saillies axiales (31, 32, 33, 34) pour l'insertion axiale de l'une des portions de surface profilée (2, 3, 5, 6) ainsi que d'un fil métallique (11), et au moins l'une des saillies axiales (31, 32, 33, 34) présentant une plus grande étendue axiale qu'au moins une autre des saillies axiales (31, 32, 33, 34) afin de former de cette manière une butée latérale pour un fil métallique (11) lors de l'empilement du fil (11).

9. Dispositif d'ancrage au sol (47) pour fixer et serrer un fil métallique (11) pouvant être retenu au moyen d'une barre profilée (1) selon l'une quelconque des revendications 1 à 7, comprenant un profilé d'ancrage (48) réalisé de préférence sous forme de profilé plat, et comprenant une ouverture de passage (50) à travers laquelle est guidée une vis à tête (51) présentant une tête de vis, qui présente une ouverture de passage (54) s'étendant sous forme coudée, notamment à angle droit par rapport à l'étendue longitudinale de tige d'une tige (53) de la vis à tête (51), pour le passage du fil métallique (11) et à laquelle est associé un élément à filetage interne (55) pour le serrage du fil (11).

10. Dispositif d'enfoncement pour enfoncer une barre profilée (1) selon l'une quelconque des revendications 1 à 7 dans la terre, comprenant une portion d'impact (43) constituant une surface d'impact, avec une butée axiale pour l'appui axial contre un côté frontal arrière de la barre profilée et pour l'introduction d'une force d'impact exercée sur la portion d'impact (43) dans la barre profilée (1) et comprenant une portion d'accrochage s'étendant axialement à partir de la butée axiale (42) pour l'accrochage axial du dispositif d'enfoncement (40) dans la barre profilée (1), la portion d'accrochage présentant au moins une fente pour recevoir (22) l'une des portions de surface profilées (2, 3, 5, 6).

11. Attache pour plante pour fixer une plante (20), en particulier une vigne, à un fil métallique (11), qui est retenu au moyen d'une barre profilée (11) selon l'une quelconque des revendications 1 à 7, l'attache pour plante (16) présentant au moins une portion de fixation de fil métallique (18, 21) pour guider le fil métallique (11) et une portion de fixation de plante (17) flexible réalisée de préférence d'une seule pièce avec la portion de fixation de fil métallique (18, 21) pour entourer la plante (20).

12. Attache pour plante, en particulier selon l'une quelconque des revendications 11, **caractérisée en ce que** l'attache pour plante (16) réalisée de préférence en plastique, encore plus préférablement sous forme de pièce moulée par infection de plastique, présente une portion d'appui (59) s'élargissant de préférence sous forme conique pour une application en alternance contre une tige de plante (57) ou une barre profilée (57) selon l'une quelconque des revendications 1 à 7, de préférence contre son arête longitudinale, ainsi qu'une portion de fixation de plante flexible (17), en particulier en forme de bande et s'étendant de préférence à l'écart de la portion d'appui (59) pour enserrer une tige de plante (57) et/ou la barre profilée (1) ainsi qu'au moins une ouverture de réception (24) réalisée de préférence sous forme de fente, de préférence deux ouvertures de réception (24) particulièrement préférablement parallèles, pour une fixation de préférence par serrage de la portion de fixation de plante (17).

13. Système de construction de cadre en fil métallique pour la viticulture, l'arboriculture fruitière ou la culture maraîchère, comprenant une barre profilée (1) selon l'une quelconque des revendications 1 à 7 pour retentir au moins un fil métallique (11) et un élément profilé de terminaison (25) selon la revendication 8, notamment monté sur une barre profilée (1), en particulier par encliquetage, et un dispositif d'ancrage dans le sol (47) selon la revendication 9 pour tendre le fil métallique (11) et un dispositif d'enfoncement (40) selon la revendication 10 et une attache pour plante (16) selon la revendication 11 ou 12 pour la fixation d'une plante (20), en particulier d'une vigne, au fil métallique (11).

14. Système de construction de cadre en fil métallique selon la revendication 13, **caractérisé en ce que** l'attache pour plante (16) s'appuie avec sa portion d'appui (59) contre une arête longitudinale de la barre profilée (1) et la portion de fixation de plante (17) est guidée autour de la barre profilée (1) notamment avec une tige de plante (57) reçue entre deux portions de surface profilées (2, 3, 5, 6) et est fixée dans l'au moins une fente, de préférence par serrage, ou **en ce qu'**un fil métallique (11) s'applique contre la base (62) de l'ouverture (60) de la portion d'appui (59) et la portion d'appui (59) s'appuie contre une tige de plante (57) et la portion de fixation de plante (17) est guidée autour de la tige de plante (57) et est fixée dans l'au moins une fente, de préférence par serrage.
